# EUROPEAN PATENT SPECIFICATION

(11) **EP 1 730 156 B1**
(45) Date of publication and mention of the grant of the patent: **17.12.2008**
(21) Application number: 04749652.6
(22) Date of filing: 01.04.2004
(51) Int. Cl.: C07F 5/02

(54) **PROCESS FOR PRODUCING TETRAKIS(FLUOROARYL)BORATE SALTS**
VERFAHREN ZUR HERSTELLUNG VON TETRAKIS(FLUORARYL)BORATSALZEN
PROCÉDÉ POUR PRODUIRE DES SELS DE TETRAKIS (FLUOROARYL)

(43) Date of publication of application: 13.12.2006
(73) Proprietor: ALBEMARLE CORPORATION, Baton Rouge, Louisiana 70801 (US)
(72) Inventor: LEE, John, Y., Baton Rouge, LA 70808 (US); MATHUR, Rajeev, S., Baton Rouge, LA 70809 (US)
(74) Representative: UEXKÜLL & STOLBERG
(86) International application number: PCT/US2004/010145
(87) International publication number: WO 2005/105816

(56) References cited:
- EP-A- 0 985 672
- US-A- 5 919 983
- US-A- 6 162 950
- US-B1- 6 169 208
- US-B1- 6 388 138

## Description

### TECHNICAL FIELD

This invention relates to a method for making protic ammonium tetrakis(^{F}aryl)borates from alkali metal tetrakis(^{F}aryl)borates, magnesium di[tetrakis(^{F}aryl)borate]s, and halomagnesium tetrakis(^{F}aryl)borates. Protic ammonium tetrakis(^{F}aryl)borate salts are useful as cocatalysts for metallocene catalyzed polymerization.

### BACKGROUND

Methods for forming protic ammonium tetrakis(^{F}aryl)borates are known in the art. One example of this is disclosed in U.S. Pat. No. 6,162,950, in which an alkali metal tetrakis(^{F}aryl)borate and a simple protic ammonium salt are reacted to form a protic ammonium tetrakis(^{F}aryl)borate. Another way to make protic ammonium tetrakis(^{F}aryl)borates is disclosed in U.S. Pat. No. 6,169,208, where a magnesium di[tetrakis(^{F}aryl)borate] and a simple protic ammonium salt are reacted to form a protic ammonium tetrakis(^{F}aryl)borate. A method for making magnesium di[tetrakis(^{F}aryl)borate]s is also described in U.S. 6,169,208. While the processes in U.S. 6,162,950, and U.S. 6,169,208 for making protic ammonium tetrakis(^{F}aryl)borates do produce satisfactory results, it would be desirable to have such a process that minimizes product losses during the preparation and workup of the produced protic ammonium tetrakis(^{F}aryl)borates.
In addition, US-B1-6 388 138 discloses a process for the formation of a magnesium ditetrakis(^{F}aryl)borate, which process comprises contacting i) a solution comprising a liquid organic medium, which is substantially immiscible with water, and a halomagnesium tetrakis (^{F}aryl)borate, and ii) water, in such proportions that a two-phase mixture is obtained. A solution of magnesium di(tetrakis)(^{F}aryl)borate in the organic phase of a two-phase water/liquid organic medium is produced. Each aryl group of the tetrakis (^{F}aryl)borate has bonded directly to an aromatic ring at least two fluorine atoms, or at least two perfluorohydrocarbyl groups, or at least one fluorine atom and at least one perfluorohydrocarbyl group. The liquid organic medium is comprised of one or more liquid dihydrocarbylethers, one or more liquid hydrocarbons, one or more liquid halogenated hydrocarbons, or mixtures thereof. The magnesium di(tetrakis) (^{F}aryl)borate produced in a liquid medium is mixed with a salt selected from a) a protic ammonium salt, b) an onim salt, and c) a triarylmethyl salt, wherein the triaryl-ethyl cation has three aryl groups bound to a central carbon atom, to produce a protonic ammonium tetrakis (^{F}aryl)borate, an onium tetrakis (^{F}aryl)borate, or a triarylmethyl tetrakis-(^{F}aryl)borate.

Further, alkali metal tetrakis(^{F}aryl)borates tend to be thermally sensitive and sensitive to shock when dry. It would be desirable to minimize or eliminate these sensitivities, due to the utility of alkali metal tetrakis(^{F}aryl)borates as intermediates in the preparation of protic ammonium tetrakis(^{F}aryl)borates.

### SUMMARY OF THE INVENTION

This invention provides processes for producing protic ammonium tetrakis(^{F}aryl)borate salts, which fulfills the above needs. The thermal and shock sensitivity of alkali metal tetrakis(^{F}aryl)borates can be reduced or eliminated, while minimizing product loss during the preparation and workup of the produced protic ammonium tetrakis(^{F}aryl)borate salts, which are obtained in high yield and purity. A further advantage of the processes of the present invention is the elimination of the need for preforming the protic ammonium salt that is to be used to form the protic ammonium tetrakis(^{F}aryl)borate salt.

Surprisingly, it has been discovered that the presence of solvent mitigates both the thermal and shock sensitivity of alkali metal tetrakis(^{F}aryl)borates. Thus, maintaining the alkali metal tetrakis(^{F}aryl)borates in a solvent or in a solvent-wet state mitigates both the thermal and shock sensitivity of alkali metal tetrakis(^{F}aryl)borates. By solvent-wet, it is meant that less solvent than is needed to form a slurry is present with the alkali metal tetrakis(^{F}aryl)borate, but enough solvent is present so that the alkali metal tetrakis(^{F}aryl)borate is not a dry, free-flowing power.

An embodiment of this invention is a process for producing a protic ammonium tetrakis(^{F}aryl)borate. This process comprises
i) mixing together (a) at least one alkali metal tetrakis(^{F}aryl)borate, at least one magnesium ditetrakis(^{F}aryl)borate, at least one halomagnesium tetrakis(^{F}aryl)borate, or a mixture of two or more of the foregoing, (b) at least one amine, wherein the amine has the formula R₃N, in which each R is independently a hydrocarbyl group containing up to about thirty carbon atoms,
   and wherein the mole ratio of tetrakis(^{F}aryl)borate of (a) to amine of (b) is in the range of about 1:0.9 to about 1: 1.3
   and (c) one or more liquid dihydrocarbyl ethers, one or more liquid hydrocarbons, one or more liquid halogenated hydrocarbons, or a mixture of two or more of the foregoing, to form a solution or slurry in a liquid organic medium; and
ii) mixing together at least one protic acid with at least a portion of the solution or slurry formed in i),
   about wherein the mole ratio of tetrakis(^{F}aryl)borate of (a) to protons is in the range of about 1:1 to about 1:1.6
   such that a protic ammonium tetrakis(^{F}aryl)borate is formed. Each of the ^{F}aryl groups is a fluorine-containing aryl group that has bonded directly to an aromatic ring at least two fluorine atoms, or at least two perfluorohydrocarbyl groups, or at least one fluorine atom and at least one perfluorohydrocarbyl group.

Another embodiment of the invention is a process for producing a protic ammonium tetrakis(^{F}aryl)borate. This process comprises
i) mixing together (a) a mixture comprising a liquid organic medium and at least one halomagnesim tetrakis(^{F}aryl)borate, wherein the liquid organic medium is comprised of one or more liquid dihydrocarbyl, ethers, one or more liquid hydrocarbons, one or more liquid halogenated hydrocarbons, or a mixture of two or more of the foregoing, and (b) at least one amine, wherein the amine has the formula R₃N, in which each R is independently a hydrocarbyl group containing up to about thirty carbon atoms,
   and wherein the mole ratio of tetrakis(^{F}aryl)borate of (a) to amine of (b) is in the range of about 1:0.9 to about 1:1.3 to form a
   solution or slurry; and
ii) mixing together at least one protic acid with at least a portion of the solution or slurry formed in i),
wherein the mole ratio of tetrakis(^{F}aryl)borate of (a) to protons is in the range of about 1:1 to about 1:1.6
such that a protic ammonium tetrakis(^{F}aryl)borate is formed.
Each of the ^{F}aryl groups is a fluorine-containing aryl group that has bonded directly to an aromatic ring at least two fluorine atoms, or at least two perfluorohydrocarbyl groups, or at least one fluorine atom and at least one perfluorohydrocarbyl group.

The borate anion has four fluorine-containing aryl groups, each of which has bonded directly to an aromatic ring at least two fluorine atoms, or at least two perfluorohydrocarbyl groups, or at least one fluorine atom and at least one perfluorohydrocarbyl group. It is preferred that at least two fluorine atoms, or at least two perfluorohydrocarbyl groups are bonded directly to an aromatic ring. Preferably, each position on the aromatic ring(s) of the ^{F}aryl group that is not a fluorine atom or a perfluorohydrocarbyl group is substituted by a hydrogen atom, a hydrocarbyl group, an alkoxy group, or a silyl group. The ^{F}aryl groups may be the same or different from each other; it is preferred that all four ^{F}aryl groups are the same.

Further embodiments of this invention will be apparent from the ensuing description and appended claims.

### FURTHER DETAILED DESCRIPTION OF THE INVENTION

The presence of oxygen in the practice of the present invention is usually detrimental. Thus, the minimization of oxygen in all manipulations is recommended and preferred. It is preferred that all operations are conducted in an inert atmosphere comprised of one or more inert gases, such as, for example, nitrogen, helium, or argon.

A feature of this invention is the introduction of the amine and the protic acid in separate steps. An advantage of this feature is that it allows nearly stoichiometric amounts of both the amine and the protic acid to be used, without decreasing the product yield. When very small excesses of the amine and protic acid are used, as made possible by the present invention, only one wash of the product (organic phase) is usually necessary to render the protic ammonium tetrakis(^{F}aryl)borate free of most or all of the byproducts of the process. This is particularly advantageous when the protic ammonium tetrakis(^{F}aryl)borate is at least slightly soluble in the wash solvent, because product loss is minimized.

The various components used in the processes of the invention may be in the form of a complex with water or solvent, particularly when in a solution or slurry. Some components of the process may dissociate into ions when in contact with a liquid medium.

The processes of the invention allow the amine to be protonated, forming an ammonium cation; the protic ammonium cation becomes the counterion for the tetrakis(^{F}aryl)borate anion. An inorganic alkali metal or magnesium salt is formed, and the anion of this inorganic salt is usually from the protic acid. The amount of amine and protons is one mole of amine and one mole of protons per mole of tetrakis(^{F}aryl)borate anion. Thus, one mole of amine and' one mole of protons per mole alkali metal tetrakis(^{F}aryl)borate or halomagnesium tetrakis(^{F}aryl)borate, or two moles of amine and two moles of protons per mole magnesium di[tetrakis(^{F}alyl)borate] are used. The mole ratio of tetrakis(^{F}aryl)borate to amine is in the range of about 1:0.9 to about 1:1.3. When the amine or the protic ammonium tetrakis(^{F}aryl)borate is at least slightly soluble in a solvent to be used later in the process, it is usually preferred to use an excess of the amine. Mole ratios in this instance are preferably in the range of about 1:1.0 to about 1:1.3. When the amine is soluble in hydrocarbons, or no ancillary solvents are used later in the process, it is sometimes preferred that the tetrakis(^{F}aryl)borate is in excess, and preferred mole ratios of the tetrakis(^{F}aryl)borate anion to the amine are preferably in the range of about 1:0.9 to about 1:1.1, and more preferably are in the range of about 1:0.95 to about 1:1. The protic acid is preferably used in excess. The mole ratio of tetrakis(^{F}aryl)borate to protons is in the range of about 1:1 to about 1:1.6. While deviations from the preferred mole ratio ranges may be used, they are considered unnecessary.

The alkali metal tetrakis(^{F}aryl)borate may be a lithium, sodium, potassium, rubidium, or cesium tetrakis(^{F}aryl)borate. Preferably, the alkali metal of the alkali metal tetrakis(^{F}aryl)borate is lithium, potassium, or sodium; most preferably, the alkali metal is sodium or potassium. Most preferred as the alkali metal is potassium; thus, the most preferred alkali metal tetrakis(^{F}aryl)borate is a potassium tetrakis(^{F}aryl)borate. Mixtures of two or more different alkali metal tetrakis(^{F}aryl)borates can be used; in these mixtures, the alkali metal, the borate anion, or both, can be different. Examples of mixtures of alkali metal tetrakis(^{F}aryl)borates include, but are not limited to, sodium tetrakis(^{F}aryl)borate and potassium tetrakis(^{F}aryl)borate, preferably with potassium tetrakis(^{F}aryl)borate predominate, and cesium tetrakis(^{F}aryl)borate and potassium tetrakis(^{F}aryl)borate, again preferably with potassium tetrakis(^{F}aryl)borate predominate.

Mixtures of two or more different magnesium di[tetrakis(^{F}aryl)borate]s in which the borate anions are different may be used in the practice of this invention. Mixtures of one or more alkali metal tetrakis(^{F}aryl)borates with one or more magnesium di[tetrakis(^{F}aryl)borate]s can be used, although such mixtures are not preferred.

The halogen atom of the halomagnesium moiety of the halomagnesium tetrakis(^{F}aryl)borate may be a chlorine atom, bromine atom, or iodine atom. Preferred halogen atoms are chlorine and bromine; most preferred is a bromine atom. Thus, the most preferred halomagnesium moiety is a bromomagnesium moiety. Mixtures of two or more halomagnesium tetrakis(^{F}aryl)borates may be used. Mixtures of one or more halomagnesium tetrakis(^{F}aryl)borates with one or more alkali metal tetrakis(^{F}aryl)borates and/or one or more magnesium di[tetrakis(^{F}aryl)borate]s can be used in the practice of this invention.

Throughout this document, the term "^{F}aryl group" shall be understood to mean, as described above, a fluorine-containing aryl group, that has bonded directly to an aromatic ring at least two fluorine atoms, or at least two perfluorohydrocarbyl groups, or at least one fluorine atom and at least one perfluorohydrocarbyl group. It is preferred that at least two fluorine atoms or at least two perfluorohydrocarbyl groups are bonded directly to an aromatic ring. Preferably, each position on the aromatic ring(s) of the ^{F}aryl group that is not a fluorine atom or a perfluorohydrocarbyl group is substituted by a hydrogen atom, a hydrocarbyl group, an alkoxy group, or a silyl group. The aromatic ring of the ^{F}aryl group may be, but is not limited to, benzene, naphthalene, anthracene, biphenyl, phenanthrene, or indene. Benzene is the preferred aromatic moiety. The perfluorohydrocarbyl groups include alkyl and aryl perfluorocarbons; suitable perfluorohydrocarbyl groups are, for example, trifluoromethyl, pentafluoroethyl, pentafluorophenyl, and heptafluoronaphthyl. The hydrocarbyl groups of the aryl groups are preferably C₁ to C₁₈ alkyl groups or C₆ to C₂₀ aryl or aralkyl groups. Examples of suitable hydrocarbyl groups are methyl, ethyl, isopropyl, tert-butyl, cyclopentyl, methylcyclohexyl, decyl, phenyl, tolyl, xylyl, benzyl, naphthyl, and tetrahydronaphthyl. The alkoxy groups preferably have C₁ to C₆ alkyl moieties. Some examples of alkoxy groups are methoxy, ethoxy, isopropoxy, methylcyclopentoxy, and cyclohexoxy. The silyl groups preferably have C₁ to C₁₈ alkyl groups or C₆ to C₂₀ aryl or aralkyl groups. Suitable silyl groups include trimethylsilyl, triisopropylsilyl, *tert-*butyl(dimethyl)silyl, tridecylsilyl, and triphenylsilyl. Examples of ^{F}aryl groups that may be present on the borate moiety in this invention include 3,5-bis(trifluoromethyl)phenyl, 2,4,6-tris(trifluoromethyl)-phenyl, 4-[tri(isopropyl)silyl]-tetrafluorophenyl, 4-[dimethyl(tert-butyl)silyl]-tetrafluorophenyl, 4'-(methoxy)-octafluorobiphenylyl, 2,3-bis(pentafluoroethyl)-naphthyl, 2-(isopropoxy)-hexafluoronaphthyl, 9,10-bis(heptafluoropropyl)-heptafluoroanthryl, 9,10-bis(p-tolyl)-heptafluorophenanthryl, and 1-(trifluoromethyl)-tetrafluoroindenyl. It is preferred that at most two substituents on the ring of the aryl group are hydrocarbyl, perfluorohydrocarbyl, or alkoxy, while the rest of the substituents are fluorine atoms.

It is highly preferred to have ^{F}aryl groups in which the all of the substituents are fluorine atoms. Examples of such groups are pentafluorophenyl, 4-nonafluorobiphenylyl, 2-nonafluorobiphenylyl, 1-heptafluoronaphthyl, 2-heptafluoronaphthyl, 7-nonafluoroanthryl, 9-nonafluorophenanthryl, and analogous groups. The most highly preferred perfluoroaryl group is pentafluorophenyl; thus, the most highly preferred borate is tetrakis(pentafluorophenyl)borate.

Suitable alkali metal tetrakis(^{F}aryl)borates include lithium tetrakis(pentafluorophenyl)borate, sodium tetrakis(pentafluorophenyl)borate, potassium tetrakis(pentafluorophenyl)borate, rubidium tetrakis(pentafluorophenyl)borate, cesium tetrakis(pentafluorophenyl)borate, lithium tetrakis(4-nonafluorobiphenylyl)borate, sodium tetrakis(4-nonafluorobiphenylyl)borate, potassium tetrakis(2-nonafluorobiphenylyl)borate, cesium tetrakis(2-nonafluorobiphenylyl)borate, lithium tetrakis(1-heptafluoronaphthyl)borate, sodium tetrakis(2-heptafluoronaphthyl)borate, potassium tetrakis(1-heptafluoro-naphthyl)borate, cesium tetrakis(2-heptafluoronaphthyl)borate, sodium tetrakis(7-nonafluoroanthryl)borate, potassium tetrakis(9-nonafluorophenanthryl)borate, lithium tetrakis(2,4,6-tris(trifluoromethyl)-phenyl)borate, sodium tetrakis(3,5-bis(trifluoromethyl)phenyl)borate, potassium tetrakis(3,5-bis(trifluoromethyl)phenyl)borate, rubidium tetrakis(4'-(methoxy)-octafluorobiphenylyl)borate, cesium tetrakis(2,3-bis(pentafluoroethyl)-naphthyl)borate, lithium tetrakis(2-(isopropoxy)-hexafluoronaphthyl)borate, sodium tetrakis(4-[tri(isopropyl)silyl]-tetrafluorophenyl)borate, potassium tetrakis(4-[dimethyl(*tert*-butyl)silyl]-tetrafluorophenyl)borate, rubidium tetrakis(9,10-bis(p-tolyl)-heptafluorophenanthryl)borate, cesium tetrakis(9,10-bis(hepta-fluoropropyl)-heptafluoroanthryl)borate, and the like. Preferred alkali metal tetrakis(^{F}aryl)borates are sodium tetrakis(pentafluorophenyl)borate, potassium tetrakis(pentafluorophenyl)borate, sodium tetrakis(4-nonafluorobiphenylyl)borate, potassium tetrakis(2-nonafluorobiphenylyl)borate, sodium tetrakis(2-heptafluoronaphthyl)borate, potassium tetrakis(1-heptafluoronaphthyl)borate; more preferred are sodium tetrakis(pentafluorophenyl)borate, potassium tetrakis(pentafluorophenyl)borate, sodium tetrakis(4-nonafluorobiphenylyl)borate, and potassium tetrakis(2-nonafluoro-biphenylyl)borate. Most preferred are sodium tetrakis(pentafluorophenyl)borate and potassium tetrakis(pentafluorophenyl)borate.

Examples of magnesium di[tetrakis(^{F}aryl)borate]s include, but are not limited to, magnesium di[tetrakis(pentafluorophenyl)borate], magnesium di[tetrakis(4-nonafluorobiphenylyl)borate], magnesium di[tetrakis(2-nonafluorobiphenylyl)borate], magnesium di[tetrakis(1-heptafluoronaphthyl)borate], magnesium di[tetrakis(2-heptafluoro-naphthyl)borate], magnesium di[tetrakis(7-nonafluoroanthryl)borate], magnesium di[tetrakis(9-nonafluorophenanthryl)borate], magnesium di[tetrakis(2,4,6-tris(trifluoromethyl)-phenyl)borate], magnesium di[tetrakis(3,5-bis(trifluoromethyl)phenyl)-borate], magnesium di[tetrakis(4'-(methoxy)-octafluorobiphenylyl)borate], magnesium di[tetrakis(2,3-bis(pentafluoroethyl)-naphthyl)borate], magnesium di[tetrakis(2-(isopropoxy)-hexafluoronaphthyl)borate], magnesium di[tetrakis(4-[tri(isopropyl)silyl]-tetrafluorophenyl)borate], magnesium di[tetrakis(4-[dimethyl(*tert*-butyl)silyl]-tetrafluoro-phenyl)borate], magnesium di[tetrakis(9,10-bis(p-tolyl)-heptafluorophenanthryl)borate], and magnesium di[tetrakis(9,10-bis(heptafluoropropyl)-heptafluoroanthryl)borate]. Magnesium di[tetrakis(pentafluorophenyl)borate], magnesium di[tetrakis(4-nonafluorobiphenylyl)borate], magnesium di[tetrakis(2-nonafluorobiphenylyl)borate], magnesium di[tetrakis(1-heptafluoronaphthyl)borate], magnesium di[tetrakis(2-heptafluoro-naphthyl)borate], magnesium di[tetrakis(7-nonafluoroanthryl)borate], and magnesium di[tetrakis(9-nonafluorophenanthryl)borate] are preferred magnesium di[tetrakis(^{F}aryl)borate]s; more preferred are magnesium di[tetrakis(pentafluoro-phenyl)borate], magnesium di[tetrakis(4-nonafluorobiphenylyl)borate] and magnesium di[tetrakis(2-nonafluorobiphenylyl)borate]. Most preferred is magnesium di[tetrakis(pentafluorophenyl)borate].

Suitable halomagnesium tetrakis(^{F}aryl)borates include, but are not limited to, chloromagnesium tetrakis(pentafluorophenyl)borate, bromomagnesium tetrakis(pentafluorophenyl)borate, iodomagnesium tetrakis(pentafluorophenyl)borate, chloromagnesium tetrakis(4-nonafluorobiphenylyl)borate, bromomagnesium tetrakis(2-nonafluorobiphenylyl)borate, iodomagnesium tetrakis(1-heptafluoro-naphthyl)borate, chloromagnesium tetrakis(2-heptafluoronaphthyl)borate, bromomagnesium tetrakis(1-heptafluoronaphthyl)borate, iodomagnesium tetrakis(7-nonafluoroanthryl)borate, chloromagnesium tetrakis(9-nonafluorophenanthryl)borate, bromomagnesium tetrakis(3,5-bis(trifluoromethyl)phenyl)borate, iodomagnesium tetrakis(2,4,6-tris(trifluoromethyl)-phenyl)borate, chloromagnesium tetrakis(4'-(methoxy)-octafluorobiphenylyl)borate, bromomagnesium tetrakis(2,3-bis(pentafluoroethyl)-naphthyl)borate, iodomagnesium tetrakis(2-(isopropoxy)-hexafluoronaphthyl)borate, chloromagnesium tetrakis(4-[tri(isopropyl)silyl]-tetrafluorophenyl)borate, bromomagnesium tetrakis(4-[dimethyl(*tert*-butyl)silyl]-tetrafluorophenyl)borate, iodomagnesium tetrakis(9,10-bis(p-tolyl)-heptafluorophenanthryl)borate, chloromagnesium tetrakis(9,10-bis(heptafluoropropyl)-heptafluoroanthryl)borate, bromomagnesium tetrakis(4-nonafluorobiphenylyl)borate, and iodomagnesium tetrakis(3,5-bis(trifluoromethyl)phenyl)borate. Preferred halomagnesium tetrakis(^{F}aryl)borates are chloromagnesium tetrakis(pentafluorophenyl)borate, bromomagnesium tetrakis(pentafluorophenyl)borate, iodomagnesium tetrakis(pentafluorophenyl)borate, chloromagnesium tetrakis(4-nonafluorobiphenylyl)borate, bromomagnesium tetrakis(2-nonafluorobiphenylyl)borate, chloromagnesium tetrakis(2-heptafluoro-naphthyl)borate, and bromomagnesium tetrakis(1-heptafluoronaphthyl)borate. Chloromagnesium tetrakis(pentafluorophenyl)borate, bromomagnesium tetrakis(pentafluorophenyl)borate, iodomagnesium tetrakis(pentafluorophenyl)borate, and chloromagnesium tetrakis(2-heptafluoronaphthyl)borate are more preferred. The most preferred halomagnesium tetrakis(^{F}aryl)borates are chloromagnesium tetrakis(pentafluorophenyl)borate and bromomagnesium tetrakis(pentafluorophenyl)borate.

Protic ammonium salts of the tetrakis(^{F}aryl)borate are formed from the alkali metal tetrakis(^{F}aryl)borate and/or magnesium di[tetrakis(^{F}aryl)borate]. The protic ammonium cations have the general formula [R₃NH]^{⊕}, wherein R is as defined for the amines. Examples of protic ammonium tetrakis(^{F}aryl)borates that can be produced in the practice of the invention include, but are not limited to, trimethylammonium tetrakis(4-nonafluoro-biphenylyl)borate, triethylammonium tetrakis(1-heptafluoronaphthyl)borate, tri(*n*-butyl)ammonium tetrakis(pentafluorophenyl)borate, cyclohexyl(dimethyl)ammonium tetrakis(2-nonafluorobiphenylyl)borate, tri(*n*-octyl)ammonium tetrakis(pentafluorophenyl)-borate, di(tallowalkyl)methylammonium tetrakis(pentafluorophenyl)borate, (tallowalkyl)dimethylammonium tetrakis(2-heptafluoronaphthyl)borate, di(benzyl)methylammonium tetrakis(7-nonafluoroanthryl)borate, benzyl(dimethyl)ammonium tetrakis(4-nonafluorobiphenylyl)borate, benzyl(diethyl)ammonium tetrakis(2-nonafluorobiphenylyl)borate, phenyl(dimethyl)ammonium tetrakis(pentafluorophenyl)borate, phenyl(diethyl)ammonium tetrakis(pentafluorophenyl)borate, diphenyl(methyl)ammonium tetrakis(2-nonafluorobiphenylyl)borate, diphenyl(ethyl)amimonium tetrakis(1-heptafluoronaphthyl)borate, triphenylammonium tetrakis(2-heptafluoronaphthyl)borate, trimethylammonium tetrakis-(4'-(methoxy)-octafluorobiphenylyl)borate, triethylammonium tetrakis(2,4,6-tris(trifluoromethyl)-phenyl)borate, tri(*n*-butyl)ammonium tetrakis(3,5-bis(trifluoromethyl)phenyl)borate, cyclohexyl(dimethyl)ammonium tetrakis(2,3-bis(pentafluoroethyl)-naphthyl)borate, tri(*n-*octyl)ammonium tetrakis(1-heptafluoronaphthyl)-borate, di(tallowalkyl)methylammonium tetrakis(2-nonafluorobiphenylyl)borate, (tallowalkyl)dimethylammonium tetrakis(2-(isopropoxy)-hexafluoronaphthyl)borate, di(benzyl)methylammonium, benzyl(dimethyl)ammonium tetrakis(4-nonafluorobiphenylyl)-borate, benzyl(diethyl)ammonium tetrakis(9,10-bis(heptafluoropropyl)-heptafluoroanthryl)-borate, phenyl(dimethyl)ammonium tetrakis(3,5-bis(trifluoromethyl)phenyl)borate, phenyl(diethyl)ammonium tetrakis(9-nonafluorophenanthryl)borate, diphenyl(methyl)ammonium tetrakis(4-[tri(isopropyl)silyl]-tetrafluorophenyl)borate, diphenyl(ethyl)amimonium tetrakis(9,10-bis(p-tolyl)-heptafluorophenanthryl)borate, and triphenylammonium tetrakis(4-[dimethyl(*tert-*butyl)silyl]-tetrafluorophenyl)borate.

The amines used in this invention are tertiary amines and have the formula R₃N, where each R is independently a hydrocarbyl group containing up to about thirty carbon atoms. R is preferably an aliphatic or aromatic hydrocarbyl group; preferred hydrocarbyl groups include methyl and phenyl. Amines that may be used in this invention include trimethylamine, triethylamine, tri(*n*-butyl)amine, cyclohexyl(dimethyl)amine, tri(*n*-octyl)amine, di(tallowalkyl)methylamine (the tallowalkyl group is a saturated C₁₆-C₁₈ group), (tallowalkyl)dimethylamine, di(benzyl)methylamine, benzyl(dimethyl)amine, benzyl(diethyl)amine, phenyl(dimethyl)amine (also called dimethylaniline), phenyl(diethyl)amine, diphenyl(methyl)amine, diphenyl(ethyl)amine, triphenylamine, and the like. Preferred amines are tri(*n*-butyl)amine, phenyl(dimethyl)amine, phenyl(diethyl)amine, and tri(*n*-octyl)amine; more preferred amines are phenyl(dimethyl)amine and phenyl(diethyl)amine. The most preferred amine is phenyl(dimethyl)amine. Mixtures of amines can be used, although they are usually not preferred.

The halomagnesium tetrakis(^{F}aryl)borate is generally not isolated from liquid medium after its preparation. Thus, the halomagnesium tetrakis(^{F}aryl)borate is normally already in a liquid organic medium comprised of one or more liquid dihydrocarbyl ethers, one or more liquid hydrocarbons, one or more halogenated hydrocarbons, or a mixture of two or more of the foregoing. The liquid dihydrocarbyl ethers, liquid hydrocarbons, and halogenated hydrocarbons are as described below.

The liquid organic medium of the solution or slurry that also comprises the alkali metal tetrakis(^{F}aryl)borate, the magnesium di[tetrakis(^{F}aryl)borate], or the halomagnesium tetrakis(^{F}aryl)borate is comprised of one or more liquid dihydrocarbyl ethers, one or more liquid hydrocarbons, one or more halogenated hydrocarbons, or a mixture of two or more of the foregoing solvents. These three solvent types and their mixtures may be collectively referred to as the organic solvent or organic solvent component in this document. Water may be present in the liquid organic medium. Typically, a solution is formed when a liquid dihydrocarbyl ether is used to form the solution or slurry, while a slurry is usually formed when a liquid hydrocarbon and/or a liquid halogenated hydrocarbon is used to form the solution or slurry. The alkali metal tetrakis(^{F}aryl)borate or magnesium di[tetrakis(^{F}aryl)borate] in a liquid hydrocarbon and/or a liquid halogenated hydrocarbon sometimes forms an oily layer at the bottom of the solution when traces of ether and/or water are present. Those ethers, hydrocarbons, and halogenated hydrocarbons that are substantially immiscible with water, such that a two-phase mixture will be formed, are preferred. Ethers that may be used include, for example, diethyl ether, ethyl *n*-propyl ether, di-*n*-propyl ether, diisopropyl ether, di-*n*-butyl ether, *tert*-butyl ethyl ether, cyclohexylmethyl ether, diheptyl ether, and similar compounds. Preferred ethers are diethyl ether and diisopropyl ether, especially diethyl ether. Suitable hydrocarbons include linear, branched, and cyclic saturated hydrocarbons, and aromatic hydrocarbons. Examples of suitable hydrocarbons include pentane, hexane, isohexane, cyclohexane, methylcyclohexane, heptane, octane, Isopar-E (a mixture of paraffinic C₈ isomers with boiling point of 110-140°C; a product of Exxon Mobil Corporation), cyclooctane, nonane, benzene, toluene, xylenes, mesitylene, cumene, cymene, and indene. Halogenated hydrocarbons that may be used include dichloromethane, dibromomethane, bromochloromethane, trichloromethane, 1,2-dichloroethane, 1,2-dibromoethane, 1-bromo-2-chloroethane, 1-bromopropane, (chloromethyl)cyclopropane, 1-bromobutane, 1-bromo-2-ethylbutane, 1,1-dichloro-3,3-dimethylbutane, cyclobutyl chloride, neopentyl chloride, 1-bromo-5-chloropentane, cyclopentyl bromide, 1,6-dibromohexane, *trans*-1,2-dichlorocyclohexane, 1-chloroheptane, and 1,8-dichlorooctane. Preferred as the liquid organic medium are ethers, particularly diethyl ether. Also preferred are liquid aromatic hydrocarbons; particularly preferred is toluene. Preferred halogenated hydrocarbons are dichloromethane, trichloromethane, and 1,2-dichloroethane; most preferred is dichloromethane.

Often, the alkali metal tetrakis(^{F}aryl)borate is in a liquid medium other than that desired for use in the process of the invention. The substituting of such other liquid medium in which the alkali metal tetrakis(^{F}aryl)borate is dissolved or slurried, with the desired liquid organic medium can be accomplished by a variety of means. Typical methods include decantation, solvent exchange via distillation (not to dryness), gentle evaporation (not to dryness), centrifugation, and, if the alkali metal tetrakis(^{F}aryl)borate is in solid form, filtration (without drying). For example, most of the undesired liquid medium may be decanted, followed by the mixing with the desired liquid organic medium. When the undesired liquid medium is removed by filtration, a solvent-wet solid is obtained. In this invention, the use of solvent-wet alkali metal tetrakis(^{F}aryl)borate is preferred. The key is that the alkali metal tetrakis(^{F}aryl)borate is not free from solvent at any point during the substitution. The substitution can be conducted at any suitable temperature below the boiling point of the desired liquid organic medium, so long as the alkali metal tetrakis(^{F}aryl)borate is not adversely affected.

The alkali metal tetrakis(^{F}aryl)borate, the magnesium di[tetrakis(^{F}aryl)borate], or the halomagnesium tetrakis(^{F}aryl)borate, the amine, and the organic solvent(s) (the one or more liquid dihydrocarbyl ethers, one or more liquid hydrocarbons, one or more liquid halogenated hydrocarbons, or a mixture of two or more of the foregoing) can be brought together in any order.
All of these components may be brought together at essentially the same time. Any two may be premixed before introduction of the third component. More specifically, the alkali metal tetrakis(^{F}aryl)borate or the magnesium di[tetrakis(^{F}aryl)borate] can be brought together with either the amine component or the organic solvent component, followed by admixture with the missing component. In a similar manner, the amine and the organic solvent can be brought together, followed by admixture with the alkali metal tetrakis(^{F}aryl)borate or the magnesium di[tetrakis(^{F}aryl)borate]. Preferred methods are first mixing the alkali metal tetrakis(^{F}aryl)borate or the magnesium di[tetrakis(^{F}aryl)borate] with the amine and then incorporating the organic solvent, and first mixing the alkali metal tetrakis(^{F}aryl)borate or the magnesium di[tetrakis(^{F}aryl)borate] with the organic solvent and then incorporating the amine. Stirring is not necessary during the mixing of these components; however, at some point the mixture should be stirred in order to form a solution or slurry. Generally, the alkali metal tetrakis(^{F}aryl)borate or the magnesium di[tetrakis(^{F}aryl)borate], the amine, and the organic solvent are mixed together at room temperature. The mixture may be heated or cooled, although this is considered unnecessary. Heat generation when forming the solution or slurry is usually not significant. The components of the solution or slurry need to be stirred long enough to thoroughly mix the components and to form the solution or slurry.

Normally, the protic acid is a common inorganic acid. These protic acids include, but are not limited to, hydrochloric acid, hydrobromic acid, hydroiodic acid, nitric acid, carbonic acid, sulfuric acid, phosphoric acid, tetrafluoroboric acid (fluoboric acid), and hexafluorophosphoric acid. Preferred protic acids are hydrochloric acid, hydrobromic acid, hydroiodic acid, and nitric acid; more preferred are hydrochloric acid and hydrobromic acid. Hydrochloric acid is a particularly preferred protic acid. Mixtures of two or more acids can be used.

Solutions of the protic acid are often used in the practice of this invention, and solutions are a preferred form in which to use the acid. Normally, the acid is dilute in the solution, *i.e.,* at a concentration of less than about 15 wt%. Preferably, the protic acid concentration in the solution is in the range of about 0.5 wt% to about 12 wt%. Solvents for the protic acid include, but are not limited to, diethyl ether and water. Aqueous solutions of the protic acid are preferred. A particularly preferred protic acid solution is an aqueous solution of hydrochloric acid. Another preferred protic acid solution is a solution of hydrochloric acid in diethyl ether. The hydrohalic acids are also available in gaseous form, and may be mixed with the solution or slurry in gaseous form. A preferred method for contacting the gaseous hydrohalic acid with the solution or slurry is by bubbling the gas subsurface to the solution or slurry. Advantageously, using the protic acid in gaseous form or in a solvent other than water permits the processes of the invention to be conducted under anhydrous conditions.

While the order of addition may not be important, it is generally preferred to add the protic acid to the solution or slurry in order to avoid having an excess of acid present. It is known in the art that protic acids can at least partially decompose some tetrakis(^{F}aryl)borate anions. See in this connection Brookhart et al., Organometallics, 1992,11, 3920-3922; Nishida et al., Bull Chem. Soc. Jpn., 1984, 57, 2600-2604; and Jutzi et al., Organometallics, 2000,19, 1442-1444. Agitation during the combining of the protic acid with the solution or slurry is usually necessary to minimize locally high concentrations of acid, and to ensure good contact of the protic acid with the components of the solution or slurry. The protic acid is usually mixed with the solution or slurry over time, i. e., not all at once, again for the purpose of minimizing locally high concentrations of acid.

It is preferred to cool the zone in which the acid comes into contact with the solution or slurry because it is expected that some heat may be produced during the course of the reaction, raising the temperature of the mixture. Preferred temperatures for mixing of the protic acid with the solution or slurry are in the range of about 0 to about 30°C. More preferred are temperatures in the range of about 5 to about 25°C; most preferred for mixing of the protic acid with the solution or slurry are in the range of about 10 to about 20°C.

The contact time for alkali metal tetrakis(^{F}aryl)borate, magnesium di[tetrakis(^{F}aryl)borate], or halomagnesium tetrakis(^{F}aryl)borate and the protic acid is preferably from about fifteen minutes to about eight hours; more preferred is a time in the range of from about twenty minutes to about six hours. Normally, the mixture is stirred for a period of time after the end of the combining of the protic acid with the solution or slurry. If the solvent of the protic acid is immiscible with the liquid organic medium of the solution or slurry, the product mixture generally forms two phases when allowed to stand, an aqueous phase and an organic phase. If the solvent for the protic acid is miscible with the liquid organic medium of the solution or slurry, or the protic acid was added in gaseous form, only one phase is present.

The pH of an immiscible solvent layer can be monitored during the mixing of the protic acid with the solution or slurry. It is generally preferred to keep the pH of the solvent layer less than about 7; more preferably the pH is less than about 5. Most preferably, the pH of the solvent layer is in the range of about 3 to about 5. By keeping the stoichiometry of the acid to the amine close to very close to one mole of protons per one mole of amine, the pH in the solvent layer is easily controlled.

The product of mixing the protic acid with the solution or slurry containing the amine, the alkali metal tetrakis(^{F}aryl)borate, magnesium di[tetrakis(^{F}aryl)borate], or halomagnesium tetrakis(^{F}aryl)borate and the one or more liquid dihydrocarbyl ethers, one or more liquid hydrocarbons, and/or one or more liquid halogenated hydrocarbons are a protic ammonium tetrakis(^{F}aryl)borate and an inorganic salt. The cation of the inorganic salt is from the alkali metal tetrakis(^{F}aryl)borate, magnesium di[tetrakis(^{F}aryl)borate], or halomagnesium tetrakis(^{F}aryl)borate, and the anion of the inorganic salt is from the protic acid. When two phases are formed from the solvent/liquid organic medium mixture, the inorganic salt is typically found in the solvent phase of the separated product mixture, either dissolved or in suspended form, depending on the solubility of the particular inorganic salt in the solvent.

Occasionally, the phase boundary in a two-phase solvent/liquid organic medium mixture is not well defined. Greater amounts of solvent and/or liquid organic medium can be used to clarify the phase boundary. Another approach is to use a salt wash. The salt wash is usually a dilute solution of a simple inorganic salt. Preferred concentrations of the salt are in the range of about 0.1 to about 15 wt%; more preferred are concentrations in the range of about 0.2 to about 5 wt%. The most preferred concentrations of the inorganic salt in the aqueous solution are in the range of about 0.25 to about 1 wt%. Dilute solutions of the inorganic salt are preferred at least in certain instances to minimize exchange of the protic ammonium cation with the cation of the inorganic salt. Often, the salt wash is done at a temperature less than about 25°C, preferably at a temperature in the range of about 10 to about 20°C, and more preferably at a temperature in the range of about 12 to about 18°C. The solvent is preferably the same solvent as that used for the protic acid. A preferred solvent is water. Any of a large variety of inorganic salts can be used.
For simplicity, it is often preferable to use a salt similar to that of the inorganic salt that is coproduced in the process. Examples of inorganic salts that can be used in a salt wash include sodium chloride, potassium chloride, potassium bromide, cesium bromide, lithium iodide, potassium iodide, sodium nitrate, potassium carbonate, sodium sulfate, lithium phosphate, potassium tetrafluoroborate, sodium hexafluorophosphate, and the like.

Once the layer comprising the protic ammonium tetrakis(^{F}aryl)borate has been separated from the other layer (if two layers had formed) and, if desired, the solution comprising the protic ammonium tetrakis(^{F}aryl)borate has been washed, various further operations may be conducted. The liquid organic medium may be exchanged for another solvent. The protic ammonium tetrakis(^{F}aryl)borate may be isolated. Generally, protic ammonium tetrakis(^{F}aryl)borates that are not hydrocarbon-soluble form solids, while protic ammonium tetrakis(^{F}aryl)borates that are hydrocarbon-soluble form oils. Thus, it is sometimes preferred to keep a hydrocarbon-soluble protic ammonium tetrakis(^{F}aryl)borate in solution. Further purification steps may be performed. Similarly, these further operations may be performed on a solution comprising the protic ammonium tetrakis(^{F}aryl)borate from a process in which two layers were not formed.

One preferred further operation, particularly when the liquid organic medium is comprised predominately of one or more liquid dihydrocarbyl ethers, is a distillation of the liquid organic medium in boiling hydrocarbon to remove at least a portion of the liquid organic medium, especially the liquid dihydrocarbyl ether. If the protic ammonium tetrakis(^{F}aryl)borate is not hydrocarbon-soluble, it will precipitate as the liquid organic medium is removed. If the protic ammonium tetrakis(^{F}aryl)borate is hydrocarbon-soluble, it will remain in solution. Suitable hydrocarbons include those described above for the liquid organic medium. Preferred hydrocarbons include aromatic hydrocarbons, particularly toluene, and saturated hydrocarbons, such as hexane, methylcyclohexane, heptane, octane, Isopar-E, and nonane. Isopar-E is a preferred saturated hydrocarbon. Mixtures of hydrocarbons can be used. The use of at least one aromatic hydrocarbon allows azeotropic removal of water or ether that is present in the liquid organic medium. Thus, use of an aromatic hydrocarbon is preferred, either alone or in admixture with a saturated hydrocarbon. Mixtures of at least one saturated hydrocarbon and at least one aromatic hydrocarbon are preferred. A particularly preferred mixture of hydrocarbons is a mixture of toluene and Isopar-E.

Another preferred further operation involves the use of the ability of the protic ammonium tetrakis(^{F}aryl)borates to form liquid clathrates, especially in the purification of the protic ammonium tetrakis(^{F}aryl)borates. As described in U.S. 6,338,138, protic ammonium tetrakis(^{F}aryl)borates, including those in which the protic ammonium cation is without aryl groups, can form liquid clathrates in combination with at least one liquid aromatic hydrocarbon. Suitable liquid aromatic hydrocarbons include, for example, benzene, toluene, xylenes, mesitylene, cumene, cymene, and indene; toluene is highly preferred. A weight ratio of tetrakis(^{F}aryl)borate salt to aromatic hydrocarbon in the range of from about 1:1.0 to about 1:3.0 is usually effective to form a stable clathrate, although it is recognized that this ratio may vary somewhat with the specific cation, tetrakis(^{F}aryl)borate anion, aromatic hydrocarbon, and temperature chosen. Excess aromatic hydrocarbon does not adversely affect the formation of the liquid clathrate, and a quantity in excess of the amount that is necessary to form the liquid clathrate is preferably used. The addition of heat is sometimes necessary to induce clathrate formation; in such cases, it is preferred to heat to a temperature below the boiling point of the chosen liquid aromatic hydrocarbon(s). The pressure during clathrate formation is typically atmospheric. These clathrates are generally stable when heated, up to a deformation temperature, such temperature varying with the particular cation, anion, and solvent chosen. The liquid clathrate is generally formed by mixing the liquid aromatic hydrocarbon with the tetrakis(^{F}aryl)borate salt while agitating, until a readily recoverable liquid clathrate layer, immiscible with the liquid aromatic hydrocarbon, is formed. A two-layer mixture is usually formed, and the liquid clathrate is normally the lower layer. The layers are easily separable, for example by decantation. Once separated, the addition of excess nonsolvent, or removal of the aromatic hydrocarbon from the liquid clathrate layer by methods such as vacuum distillation, usually results in the isolation of the protic ammonium tetrakis(^{F}aryl)borate as a solid. Because the liquid clathrate layer excludes other species, it is possible to obtain very pure tetrakis(^{F}aryl)borate salts using liquid clathrate formation as a purification method.

Ethers tend to form complexes with some protic ammonium tetrakis(^{F}aryl)borates. Heating the isolated protic ammonium tetrakis(^{F}aryl)borate•ether complex under vacuum normally breaks the complex, and drives off the ether, leaving the uncomplexed protic ammonium tetrakis(^{F}aryl)borates.

The following examples are presented for purposes of illustration, and are not intended to impose limitations on the scope of this invention.

### EXAMPLE 1

All operations in this example were conducted under dry nitrogen. N,N-dimethylaniline (1.90 g; 15.7 mol) was added to approximately 14.9 g of toluene-wet, purified potassium tetrakis(pentafluorophenyl)borate solid (70.4 wt% potassium tetrakis(pentafluorophenyl)borate, 10.5 g, 14.6 mmol). Next, diethyl ether (88 g) was added to the mixture. This mixture was stirred until the potassium tetrakis(pentafluorophenyl)borate dissolved. While stirring, an aqueous solution of hydrochloric acid (83.5 g, 0.71 wt%; 0.59 g neat, 16.3 mmol) was added during 5 minutes while maintaining the temperature < 15°C. With continued stirring, the temperature was allowed to warm to 18°C over 30 minutes. Then, the stirring was discontinued, and the mixture was allowed to stand to allow formation of separate aqueous and organic phases. The lower, aqueous phase was removed and discarded. With stirring, the organic phase was washed at 13 to 15°C with an aqueous sodium chloride solution (42.5 g, 0.25 wt%). After 20 minutes, the phases were allowed to separate, and the lower, aqueous phase was discarded.

The wet organic phase containing N,N-dimethylanilinium tetrakis(pentafluorophenyl)borate was then added, with good stirring, into 860 g of a refluxing mixture of 3:1 toluene and Isopar-E (a mixture of paraffinicC₈ hydrocarbons, Exxon Mobil Corporation) at approximately 113°C. The temperature of the mixture dropped as ether and water began to co-condense with the toluene and Isopar-E. After about 30 to 35 minutes, the addition of the N,N-dimethylanilinium tetrakis(pentafluorophenyl)borate solution was complete, and the mixture was allowed to slowly increase in temperature as the water and ether content dropped. Solvent was boiled off for another 45 minutes to remove water and ether. Once the temperature of the mixture had stabilized above 113°C, the mixture was allowed to cool to ambient temperature. The mixture was filtered to collect solid N,N-dimethylanilinium tetrakis(pentafluorophenyl)borate. The solid was rinsed thoroughly with toluene/Isopar-E, followed by hexanes, then dried for 30 minutes under a vacuum to a constant mass. The yield was nearly 95%, and the purity, as determined by ¹H and ¹⁹F NMR, was better than 97% by weight.

### EXAMPLE 2

All operations were conducted under nitrogen. A 10 wt% solution of potassium tetrakis(pentafluorophenyl)borate (13.0 g, 18.2 mmol) in diethyl ether was treated with N,N-dimethylaniline (2.35 g, 19.4 mmol). While stirring, 103.3 g of a 0.71 wt% aqueous solution of HCl (0.73 g, 20.1 mmol) were added at 10°C. With continued stirring, the temperature was allowed to warm to 18°C over 45 minutes. Then the stirring was discontinued, and the lower, aqueous phase was removed via syringe. The organic phase was treated with 50.5 g of a 1 wt% aqueous solution of NaCl at 15 to 18°C, and the mixture was stirred for about 60 minutes.
Stirring was then discontinued, and the lower, aqueous phase was removed via syringe.

The wet solution containing N,N-dimethylanilinium tetrakis(pentafluorophenyl)borate was then added into a refluxing mixture of 3:1 toluene and Isopar-E at approximately 113°C. The temperature of the mixture dropped as ether and water began to co-condense with the toluene and Isopar-E. After 105 minutes, the addition of the N,N-dimethylanilinium tetrakis(pentafluorophenyl)borate solution was complete, and the mixture was allowed to slowly increase in temperature as the water and ether content dropped. When solvent levels dropped too low, more 3:1 toluene/Isopar-E was added. Once the temperature of the mixture had stabilized around 114°C, the mixture was allowed to cool to ambient temperature. The mixture was filtered to collect solid N,N-dimethylanilinium tefirakis(pentafluorophenyl)borate. The solid was rinsed thoroughly with toluene/Isopar-E, followed by hexanes, then dried for 90 minutes under a vacuum to a constant mass. A total of 13.8 g (17.2 mmol, 95%) of high-purity N,N-dimcthylamlinium tetrakis(pentafluoro-phenyl)borate were isolated.

### EXAMPLE 3

Potassium tetrakis(pentafluorophenyl)borate (2.80g, 3 mmol), N,N-dimethylaniline (0.382g, 3.15 mmol), and Et₂O (12.0g) were added simultaneously to a reactor under N₂ and mixed together with stirring. An aqueous solution of HCl (1 wt%, 3.3 mmol) was titrated into the potassium tetrakis(pentafluorophenyl)borate mixture while stirring under N₂ for about 15 minutes at 10 to 15°C. The pH of aqueous layer was about 2 to 3. This reaction mixture was stirred at 25°C for 2 hours. The mixture was allowed to stand to allow the layers to separate. The aqueous layer was removed; its pH was 2-3. A solution of H₂O (12g) and NaCl (0.09g) was added to the ethereal layer to rinse the ethereal dimethylanilinium tetrakis(pentafluorophenyl)borate solution to remove excess HCl, dimethylanilinium chloride, and KCl byproducts. This mixture was stirred for half an hour, allowed to stand for half an hour to separate the aqueous and organic layers, and phase cut. The pH of aqueous cut was 4 to 4.5.

The ethereal dimethylanilinium tetrakis(pentafluorophenyl)borate solution was added to boiling toluene to remove the Et₂O and H₂O by azeotropic distillation at 110°C (head temperature) and 130°C (pot temperature); about 120 to 140g toluene were removed; the dimethylanilinium tetrakis(pentafluorophenyl)borate to toluene weight ratio was about 1 to 2. The dimethylanilinium tetrakis(pentafluorophenyl)borate/toluene liquid clathrate was cooled to 60°C and added into cold heptane with fast stirring to disperse and precipitate dimethylanilinium tetrakis(pentafluorophenyl)borate as a solid. After stirring at 25°C for an hour, slightly off-white dimethylanilinium tetrakis(pentafluorophenyl)borate was collected by filtration. The solid was rinsed with 10 mL of dry pentane, and dried under vacuum at 110°C for half an hour to remove more traces of Et₂O and H₂O. The dimethylanilinium tetrakis(pentafluorophenyl)borate weighed 2.10g, an isolated yield of 88%. ¹⁹F NMR and ¹H NMR showed a 96% purity; ICP showed 884 ppm of sodium and 19.4 ppm of potassium. Very low iron was observed.

### EXAMPLE 4

Dimethylanilinium tetrakis(pentafluorophenyl)borate was made as in Example 3, through the initial separation of the aqueous and organic (ethereal) layers. Water (10 g) was used to wash the organic layer; the layers did not separate clearly. NaCl (0.05 g) was added, and after 10 minutes of stirring and half an hour of standing, the layers separated. Diethyl ether and H₂O were removed from the ethereal dimethylanilinium tetrakis(pentafluorophenyl)borate by azeotropic distillation in toluene; only 50g of toluene were distilled. The dimethylanilinium tetrakis(pentafluorophenyl)borate to toluene weight ratio in the liquid clathrate was about 1:1. At 22°C, the dimethylanilinium tetrakis(pentafluorophenyl)borate solidified slowly. Two parts of toluene (∼4.4g) were added and the mixture was warmed to 65°C to re-form the liquid clathrate.
The liquid clathrate was filtered at 65°C and rinsed on a coarse frit with 1.0g of warm toluene. Heptane (2.0g) was added slowly to the filtrate with fast stirring to disperse and solidify the dimethylanilinium tetrakis(pentafluorophenyl)borate. Dimethylanilinium tetrakis(pentafluorophenyl)borate was collected by filtration, and rinsed with heptane. The solid was dried under vacuum at 110°C to remove traces of Et₂O by thermally splitting the dimethylanilinium tetrakis(pentafluorophenyl)borate•Et₂O complex; 2.10 g of dimethylanilinium tetrakis(pentafluorophenyl)borate were obtained. ¹⁹F NMR and ¹H NMR showed a 96% purity. ICP showed 769 ppm of sodium and 60 ppm of potassium; very low iron was observed. The isolated yield of slightly off-white dimethylanilinium tetrakis(pentafluorophenyl)borate was 87.5%.

### EXAMPLE 5

The procedures of Example 3 were repeated, through the azeotropic distillation in toluene, except that a salt wash was not done. The N,N-dimethylanilinium tetrakis(pentafluorophenyl)borate to toluene weight ratio was 1:2. Diethyl ether (2 parts by weight) and heptane (2 to 3 parts by weight) were added to disperse and precipitate N,N-dimethylanilinium tetrakis(pentafluorophenyl)borate at 22°C (in a duplicate small scale test, more heptane needed to precipitate N,N-dimethylanilinium tetrakis(pentafluorophenyl)borate and a lower temperature was needed to increase the yield). Snow-white N,N-dimethylanilinium tetrakis(pentafluorophenyl)borate was collected by filtration and rinsed with small amount of pentane. The solid N,N-dimethylanilimum tetrakis(pentafluorophenyl)borate was dried at 130°C under vacuum for 3 hours to give an 80+% yield of the product. ¹⁹F NMR and ¹H NMR showed a purity of 99%.

### EXAMPLE 6

Colored dimethylanilinium tetrakis(pentafluorophenyl)borate (2.0g; 95 to 96% pure), made as described in Example 3, toluene (6.0g), and Et₂O (6.0g) were charged into a reactor. This mixture was heated to 65°C under N₂ under 10 to 15 psig pressure in a closed system to form a liquid clathrate, and was stirred for an additional half hour at 65°C to allow the colored impurities to be extracted into the toluene/Et₂O solution. The product mixture was cooled to 22°C with fast stirring to disperse and precipitate dimethylanilinium tetrakis(pentafluorophenyl)borate. The mixture was further cooled to 0 to 5°C in order to increase the amount of dimethylanilinium tetrakis(pentafluorophenyl)borate isolated. Snow-white solid dimethylanilinium tetrakis(pentafluorophenyl)borate was collected by filtration and dried under vacuum. The isolated yield was 90 to 95% and the purity was estimated to be greater than 98% (starting purity was 95 to 96%).

### EXAMPLE 7

Colored dimethylanilinium tetrakis(pentafluorophenyl)borate (1.15g; 95 to 96% pure), toluene (3.0g), and CH₂Cl₂ (3.0g) were charged into a reactor. This mixture was heated to 65°C under N₂ under 10 to 15 psig pressure in a closed system to form a liquid clathrate, and was stirred for an additional half hour at 65°C to allow the colored impurities to be extracted into the toluene/CH₂Cl₂ solution. The solution was cooled to 0 to 5°C, and filtered. The solid dimethylanilinium tetrakis(pentafluorophenyl)borate was snow white. It was estimated that the recovery was 90 to95%, with an estimated purity of 98+%.

### EXAMPLE 8

Colored dimethylanilinium tetrakis(pentafluorophenyl)borate (1.15g; 95 to 96% pure), toluene (3.0g), and CH₂Cl₂ (3.0g) were charged into a reactor. This mixture was heated to 65°C under N₂ under 10 to 15 psig pressure in a closed system to form a liquid clathrate, and was stirred for an additional half hour at 65°C to allow the colored impurities to be extracted into the toluene/CH₂Cl₂ solution. Hexane (1.5 g) was added slowly into the warm dimethylanilinium tetrakis(pentafluorophenyl)borate/toluene/CH₂Cl₂ product mixture at 50°C to disperse and precipitate dimethylanilinium tetrakis(pentafluorophenyl)borate. The solution was stirred for an additional 30 minutes, cooled to 0 to 5°C, and filtered. It was estimated that the recovery was 90 to 95%, with an estimated purity of 98+%.

### EXAMPLE 9

Anhydrous, but toluene/Isopar-E wet, greenish crystals of N,N-dimethylanilinium tetrakis(pentafluorophenyl)borate (∼15 g) were added to approximately 30 g of diethyl ether. After stirring at 20°C for 1 hour, the mixture was chilled in a freezer at 0°C for 75 minutes. The mixture was filtered at 0 to 5°C, then washed thoroughly with 30 g of isohexane. After drying under vacuum at room temperature, 15.3 g of white powdery solids were isolated. ¹H NMR analysis indicated a molar ratio of ether to desired product of 1:1. The diethyl ether filtrate contained < 2 wt% of desired product, a minimal loss. The solids were heated under vacuum to approximately 85°C for 13.5 hours, and then allowed to cool to room temperature under nitrogen. The solids remained white in color; the recovery was 14.0 g. ¹H NMR analysis showed that the ether levels had dropped to < 300 ppm, and the purity remained at nearly 97%.

### EXAMPLE 10

Ethereal magnesium di[tetrakis(pentafluorophenyl)borate] (12.2 wt%, 2.55 mmol) was made from ethereal bromomagnesium tetrakis(pentafluorophenyl)borate. Di(tallowalkyl)methylamine (average molecular weight 523.0 g, 2.615 g, 5.0 mmol; Armeen M2HT, Akzo Nobel, Inc.) was added slowly to the magnesium di[tetrakis(pentafluorophenyl)borate] solution at 22 to 25°C with stirring. Aqueous HCl (6.00g, 3.65 wt%, 5.5 mmol) was added to the magnesium di[tetrakis(pentafluorophenyl)borate] solution during 20 minutes at 10 to 15°C with stirring, forming di(tallowalkyl)methylammonium tetrakis(pentafluorophenyl)borate. Another several drops of the HCl solution were added to the mixture. The mixture was stirred for an additional 40 minutes after the HCl addition was finished. ¹H NMR showed 19.93% di(tallowalkyl)methylammonium; ¹⁹F NMR showed 20.87% tetrakis(pentafluorophenyl)borate. Internal standards were used for both NMR spectra. Another small amount of di(tallowalkyl)methylamine (0.139 g, 0.25 mmol) was added. The mixture was allowed to stand to let the layers separate, which layers were phase cut. The aqueous layer had a pH of ∼4 to 5. The ether layer was rinsed three times with water (3 x 10 mL). The water washes each has a pH of ∼4 to 5. The ether and water were evaporated from the di(tallow)methylammonium tetrakis(pentafluorophenyl)borate at 25°C and 1 mmHg, and the resulting crude oil was heated at 125 to 130°C under vacuum.

Methylcyclohexane (80.0 g) was added to the oily di(tallowalkyl)methylammonium tetrakis(pentafluorophenyl)borate and then distilled at 101°C at atmospheric pressure (760 mmHg). The resulting oily di(tallowalkyl)methylammonium tetrakis(pentafluorophenyl)borate was heated at 125-130°C under vacuum (0.5 mmHg) for 4 hours to give 6.25 g of light brown, oily di(tallowalkyl)methylammonium tetrakis(pentafluorophenyl)borate. Enough dry, degassed methylcyclohexane was added to the di(tallowalkyl)methylammonium tetrakis(pentafluorophenyl)borate to make a solution with a total weight of 60.0 g, a 10.4 wt% solution of di(tallowalkyl)methylammonium tetrakis(pentafluorophenyl)borate. NMR analysis with an internal standard showed a 9.35 wt% solution, and a purity of 89.99% for the di(tallowalkyl)methylammonium tetrakis(pentafluorophenyl)borate. The yield of the di(tallowalkyl)methylammonium tetrakis(pentafluorophenyl)borate was 91.5%.

### EXAMPLE 11

Ethereal bromomagnesium tetrakis(pentafluorophenyl)borate (130.0 g, 15.8 wt%, 25.2 mmol) was added slowly into 130.0 g of plain water over a period of 30 minutes with stirring. The flask containing the water was in a bath of cooling water. The resultant two-layer mixture was stirred for an additional 30 minutes, allowed to settle, and phase cut at 20 to 25°C to give 104.0 g of ethereal magnesium di[tetrakis(pentafluorophenyl)borate]. NMR analyses indicated that there were 25.6 mmoles of tetrakis(pentafluorophenyl)borate present.

Solid hydrogenated di(tallowalkyl)methylamine (13.4 g, 25.6 mmol) was added at 25°C with stirring to the ethereal magnesium di[tetrakis(pentafluorophenyl)borate] over 40 minutes; no heat kick was observed. The resulting mixture was then added slowly at 5-20°C (ice-water bath used for cooling reactor) with stirring into aqueous HCl (28.1 mmol, a mixture of 25.0 g H₂O and 2.8g of 36.5 wt% aqueous HCl) over a period of 30 minutes to form di(tallowalkyl)methylammonium tetrakis(pentafluorophenyl)borate. This two-layer reaction mixture was stirred at 20 to 25°C for an additional 3 hours, allowed to settle, and phase cut to give ethereal di(tallowalkyl)methylammonium tetrakis(pentafluorophenyl)borate. The pH of lower aqueous layer was about 3.5. The ethereal solution was washed three times with plain water (3 x 40.0 g). The pH of last water wash was about 5.0. Ether was evaporated and the resulting crude oil was heated at 135°C under vacuum (1 mmHg) for 3 hours to give 33.3g of di(tallowalkyl)methylammonium tetrakis(pentafluorophenyl)borate.

Methylcyclohexane (525.0 g) was added to the oily di(tallowalkyl)methylammonium tetrakis(pentafluorophenyl)borate and then distilled at 101°C at atmospheric pressure (760 mmHg). The resulting oily di(tallowalkyl)methylammonium tetrakis(pentafluorophenyl)-borate was heated at 135°C under vacuum (1 to 10 mmHg) for one hour to give dry di(tallowalkyl)methylammonium tetrakis(pentafluorophenyl)borate. Dry methylcyclohexane (280.0 g) was added to form a 10.6 wt% solution of di(tallowalkyl)methylammonium tetrakis(pentafluorophenyl)borate. The purity of the di(tallowalkyl)methylammonium tetrakis(pentafluorophenyl)borate was 88.6%. With an internal standard, fluorine NMR showed a 9.65 wt% solution of di(tallowalkyl)methylammonium tetrakis(pentafluorophenyl)borate, and proton NMR showed a 9.23 wt% solution.

### EXAMPLE 12

¹H NMR analyses were conducted on two batches of di(tallowalkyl)methylamine, and showed approximately 1.80 mmol and 1.86 mmol of amine per gram of the waxy solids, respectively. Potassium tetrakis(pentafluorophenyl)borate (1566 g solution, 271 g neat, 0.38 mol) as a 17.3 wt% diethyl ether solution, was treated at 20°C with solid di(tallowalkyl)methylamine (205 g, 0.37 mol) containing approximately 1.80 mmol of amine per gram, and stirred to dissolve the amine. While stirring, 3.5 wt% aqueous hydrochloric acid (392 g solution, 13.8 g neat, 0.39 mol) was added to the ethereal solution. The addition time for the HCl solution was less than 5 minutes. The temperature of the mixture rose from 20°C to approximately 25°C. After agitating well for about 40 minutes, the stirring was stopped, and the two-phase mixture was allowed to settle. The aqueous phase was removed and discarded. Then, about 365 g of a 0.25 wt% aqueous sodium chloride solution were added. After agitating well for 15 minutes, the stirring was discontinued, and the two-phase mixture was allowed to settle. The aqueous phase was again removed and discarded.

### EXAMPLE 13

A 17.3 wt% diethyl ether solution of potassium tetrakis(pentafluorophenyl)borate (1454 g solution, 252 g neat, 0.35 mol) was treated at 20°C with 161 g (0.29 mol) of solid di(tallowalkyl)methylamine containing approximately 1.80 mmol of amine per gram, and 29 g (0.05 mol) of solid di(tallowalkyl)methylamine containing approximately 1.86 mmol of amine per gram. The mixture was stirred for about 5 hours to dissolve the amine. Then, 3.5 wt% aqueous hydrochloric acid (363 g solution, 12.8 g neat, 0.36 mol) was added to the ethereal mixture. The addition time for the HCl solution was less than 5 minutes. After agitating well for approximately 45 minutes, the two-phase mixture was allowed to settle, and the aqueous phase was removed and discarded. Next, the organic phase was washed with about 355 g of a 0.25 wt% aqueous sodium chloride solution. The aqueous phase was removed and discarded. The washed ethereal solution from Example 12 was combined with that of the present Example. ¹H and ¹⁹F NMR analyses indicated an averaged yield of di(tallowalkyl)methylammonium tetrakis(pentafluorophenyl)borate of nearly 98% for the two preparations.

### EXAMPLE 14

A 10% solution of di(tallowalkyl)methylamine (1.0 mmol) was made in methylcyclohexane. Potassium tetrakis(pentafluorophenyl)borate (1.0 mmol) was added, forming a slurry. HCl (1.0 M in Et₂O; 1.1 mmol used) was added to the slurry, which was then stirred at 25°C for one hour. The slurry disappeared over time, as di(tallowalkyl)methylammonium tetrakis(pentafluorophenyl)borate formed, and a precipitate (KCl) formed. The KCl was removed by filtration. Et₂O and methylcyclohexane were removed at 100°C under vacuum to give a quantitative yield of oily di(tallowalkyl)methylammonium tetrakis(pentafluorophenyl)borate.
Enough methylcyclohexane was added to make a 10 wt% solution of the di(tallowalkyl)methylammonium tetrakis(pentafluorophenyl)borate. ¹H NMR showed 84 ppm of Et₂O and no H₂O in the solution.

It is to be understood that the reactants and components referred to by chemical name or formula anywhere in the specification or claims hereof, whether referred to in the singular or plural, are identified as they exist prior to coming into contact with another substance referred to by chemical name or chemical type (*e*.*g*., another reactant, a solvent, or etc.). It matters not what preliminary chemical changes, transformations and/or reactions, if any, take place in the resulting mixture or solution or reaction medium as such changes, transformations and/or reactions are the natural result of bringing the specified reactants and/or components together under the conditions called for pursuant to this disclosure. Thus the reactants and components are identified as ingredients to be brought together in connection with performing a desired chemical reaction or in forming a mixture to be used in conducting a desired reaction. Accordingly, even though the claims hereinafter may refer to substances, components and/or ingredients in the present tense ("comprises", "is", *etc*.), the reference is to the substance, component or ingredient as it existed at the time just before it was first contacted, blended or mixed with one or more other substances, components and/or ingredients in accordance with the present disclosure. Whatever transformations, if any, that occur *in situ* as a reaction is conducted is what the claim is intended to cover. Thus the fact that a substance, component or ingredient may have lost its original identity through a chemical reaction or transformation during the course of contacting, blending or mixing operations, if conducted in accordance with this disclosure and with the application of common sense and the ordinary skill of a chemist, is thus wholly immaterial for an accurate understanding and appreciation of the true meaning and substance of this disclosure and the claims thereof.

This invention is susceptible to considerable variation in its practice. Therefore the foregoing description is not intended to limit, and should not be construed as limiting, the invention to the particular exemplifications presented hereinabove. Rather, what is intended to be covered is as set forth in the ensuing claims and the equivalents thereof permitted as a matter of law.

## Claims

1. A process for producing at least one protic ammonium tetrakis(^{F}aryl)borate, which process comprises
i) mixing together (a) at least one alkali metal tetrakis(^{F}aryl)borate, at least one magnesium
ditetrakis(^{F}aryl)borate, at least one halomagnesium tertrakis(^{F}aryl)borate, or a mixture of two or more of the foregoing, (b) at least one amine, wherein the amine has the formula R₃N, in which each R is independently a hydrocarbyl group containing up to about thirty carbon atoms,
and wherein the mole ratio of tetrakis(^{F}aryl)borate of (a) to amine of (b) is in the range of about 1:0.9 to about 1:1.3
and (c) one or more liquid dihydrocarbyl ethers, one or more liquid hydrocarbons, one or more liquid halogenated hydrocarbons, or a mixture of two or more of the foregoing, to form a solution or slurry in a liquid organic medium; and
ii) mixing together at least one protic acid with at least a portion of the solution or slurry formed in i),
wherein the mole ratio of tetrakis(^{F}aryl)borate of (a) to protons is in the range of about 1:1 to about 1:1.6
such that a protic ammonium tetrakis(^{F}aryl)borate is formed,
wherein each of the ^{F}aryl groups is a fluorine-containing aryl group that has bonded directly to an aromatic ring at least two fluorine atoms, or at least two perfluorohydrocarbyl groups, or at least one fluorine atom and at least one perfluorohydrocarbyl group.

2. A process according to Claim 1 wherein (a) is an alkali metal tetrakis(^{F}aryl)borate, and wherein said alkali metal tetrakis(^{F}aryl)borate is solvent-wet.

3. A process according to Claim 1 wherein said alkali metal tetrakis(^{F}aryl)borate is a sodium or potassium tetrakis(^{F}aryl)borate.

4. A process according to Claim 2 wherein said alkali metal tetfrakis(^{F}aryl)borate is a sodium or potassium tetrakis(^{F}aryl)borate.

5. A process according to Claim 1 wherein each position on the aromatic ring(s) of the ^{F}aryl group that is not a fluorine atom or a perfluorohydrocarbyl group is substituted by a hydrogen atom, a hydrocarbyl group, an alkoxy group, or a silyl groups.

6. A process according to Claim 1 wherein the aromatic ring of said ^{F}aryl group is a phenyl ring.

7. A process according to Claim 1 wherein all of the positions on said aromatic ring(s) of said aryl group are substituted by fluorine atoms.

8. A process according to Claim 6 wherein the tetrakis(^{F}aryl)borate is tetrakis(pentafluorophenyl)borate.

9. A process according to Claim 1 wherein the alkali metal tetrakis(^{F}aryl)borate is sodium tetrakis(pentafluorophenyl)borate or potassium tetrakis(pentafluorophenyl)borate.

10. A process according to Claim 2 wherein the alkali metal tetrakis(^{F}aryl)borate is sodium tetrakis(pentafluorophenyl)borate or potassium tetrakis(pentafluorophenyl)borate.

11. A process according to Claim 1 wherein at least one R group of said amine is a phenyl group.

12. A process according to Claim 1 wherein at least one R group of said amine is a methyl group.

13. A process according to Claim 1 wherein the amine is phenyl(dimethyl)amine.

14. A process according to Claim 1 wherein the liquid organic medium comprises one or more liquid dihydrocarbyl ethers.

15. A process according to Claim 14 wherein the liquid dihydrocarbyl ether is diethyl ether.

16. A process according to Claim 1 wherein the alkali metal tetrakis(^{F}aryl)borate is sodium tetrakis(pentafluorophenyl)borate or potassium tetrakis(pentafluorophenyl)borate, wherein the amine is phenyl(dimethyl)amine wherein the liquid organic medium comprises one or more liquid dihydrocarbyl ethers, and wherein said liquid dihydrocarbyl ether is diethyl ether.

17. A process according to Claim 16 wherein said alkali metal tetrakis(^{F}aryl)borate is solvent-wet.

18. A process according to Claim 1 wherein (a) is a magnesium di[tetrakis(^{F}aryl)borate].

19. A process according to Claim 18 wherein said magnesium di[tetrakis(^{F}aryl)borate] is magnesium di[tetrakis(pentafluorophenyl)borate].

20. A process according to Claim 18 wherein said magnesium di[tetrakis(^{F}aryl)borate] is magnesium di[tetrakis(pentafluorophenyl)borate], wherein the amine is phenyl(dimethyl)amine, wherein the liquid organic medium comprises one or more liquid dihydrocarbyl ethers, and wherein said liquid dihydrocarbyl ether is diethyl ether.

21. A process according to Claim 1 wherein (a) is a halomagnesium tetrakis(^{F}aryl)borate.

22. A process according to Claim 21 wherein said halomagnesium tetrakis(^{F}aryl)borate is bromomagnesium tetrakis(pentafluorophenyl)borate.

23. A process according to Claim 21 wherein said halomagnesium tetrakis(^{F}aryl)borate is bromomagnesium tetrakis(pentafluorophenyl)borate, wherein the amine is phenyl(dimethyl)amine, wherein the liquid organic medium comprises one or morse liquid dihydrocarbyl ethers, and wherein said liquid dihydrocarbyl ether is diethyl ether.

24. A process according to Claim 1 wherein said protic acid is hydrochloric acid, hydrobromic acid, or hydroiodic acid.

25. A process according to Claim 24 wherein said acid is in diethyl ether.

26. A process according to Claim 1 wherein said acid is in aqueous solution.

27. A process according to Claim 26 wherein the acid is hydrochloric acid, hydrobromic acid, or hydriodic acid.

28. A process according to Claim 26 wherein the concentration of the acid in solution is in the range of about 0.5 wt% to about 12 wt%.

29. A process according to Claim 1 wherein the amine is phenyl(dimethyl)amine, and
wherein the protic acid is hydrochloric acid, hydrobromic acid, or hydroiodic acid.

30. A process according to Claim 1 wherein the alkali metal tetrakis(^{F}aryl)borate is sodium tetrakis(pentafluorophenyl)borate or potassium tetrakis(pentafluorophenyl)borate, wherein the amine is phenyl(dimethyl)amine, wherein the liquid organic medium comprises one or more liquid dihydrocarbyl ethers, and wherein the protic acid is hydrochloric acid, hydrobromic acid, or hydroiodic acid.

31. A process according to Claim 30 wherein said sodium tetrakis(pentafluorophenyl)borate or potassium tetrakis(pentafluorophenyl)borate is solvent-wet, and wherein said liquid dihydrocarbyl ether is diethyl ether.

32. A process according to Claim 30 wherein the acid is in aqueous solution.

33. A process according to Claim 30 wherein the acid is in diethyl ether.

34. A process according to Claim 1 wherein said magnesium di[tetrakis(^{F}aryl)borate] is magnesium di[tetrakis(pentafluorophenyl)borate], wherein the amine is phenyl(dimethyl)amine,
wherein the liquid organic medium comprises one or more liquid dihydrocarbyl ethers, wherein said liquid dihydrocarbyl ether is diethyl ether, and wherein the protic acid is hydrochloric acid, hydrobromic acid, or hydroiodic acid.

35. A process according to Claim 34 wherein the acid is in aqueous solution.

36. A process according to Claim 34 wherein the acid is in diethyl ether.

37. A process according to Claim 1 wherein said halomagnesium tetrakis(^{F}aryl)borate is bromomagnesium tetrakis(pentafluorophenyl)borate, wherein the amine is phenyl(dimethyl)amine, wherein the liquid organic medium comprises one or more liquid dihydrocarbyl ethers, wherein said liquid dihydrocarbyl ether is diethyl ether, and wherein the protic acid is hydrochloric acid, hydrobromic acid, or hydriodic acid.

38. A process according to Claim 37 wherein the acid is in aqueous solution.

39. A process according to Claim 37 wherein the acid is in diethyl ether.

40. A process according to Claim 1 further comprising distillation of the liquid organic medium in at least one boiling hydrocarbon.

41. A process according to Claim 40 wherein said boiling hydrocarbon is a mixture of at least one saturated hydrocarbon and at least one aromatic hydrocarbon.

42. A process according to Claim 41 wherein said aromatic hydrocarbon is toluene.

43. A process according to Claim 41 wherein said saturated hydrocarbon is Isopar-E.

44. A process according to Claim 40 wherein the liquid organic medium comprises one or more liquid dihydrocarbyl ethers.

45. A process according to Claim 41 wherein said protic ammonium tetrakis(^{F}aryl)borate is not hydrocarbon-soluble, and wherein said protic ammonium tetrakis(^{F}aryl)borate is precipitated.

46. A process according to Claim 41 wherein said protic ammonium tetrakis(^{F}aryl)borate is hydrocarbon-soluble, and wherein said protic ammonium tetrakis(^{F}aryl)borate is recovered in solution.

47. A process according to Claim 1 wherein at least a portion of the solution of protic ammonium tetrakis(aryl)borate in the liquid organic medium is separated from the aqueous phase.

48. A process according to Claim 47 wherein at least a portion of the protic ammonium tetrakis(aryl)borate is isolated from said solution of protic ammonium tetrakis(aryl)borate in the liquid organic medium.

49. A process according to Claim 40 wherein said boiling hydrocarbon is a mixture of at least one saturated hydrocarbon and at least one aromatic hydrocarbon, wherein said aromatic hydrocarbon is toluene, and wherein the liquid organic medium comprises one or more liquid dihydrocarbyl ethers.

50. A process according to Claim 49 wherein said saturated hydrocarbon is Isopar-E.

51. A process according to Claim 1 further comprising forming a liquid clathrate with the protic ammonium tetrakis(^{F}aryl)borate.

52. A process according to Claim 51 wherein toluene is used in forming the liquid clathrate.

53. A process according to Claim 51 wherein said protic ammonium tetrakis(^{F}aryl)borate is phenyl(diethyl)ammonium tetrakis(pentafluorophenyl)borate.

54. A process for producing at least one protic ammonium tetrakis(^{F}aryl)borate, which process comprises
i) mixing together (a) a mixture comprising,a liquid organic medium and at least one halomagnesium tetrakis(^{F}aryl)borate, wherein the liquid organic medium is comprised of one or more liquid dihydrocarbyl ethers, one or more liquid hydrocarbons, one or more liquid halogenated hydrocarbons, or a mixture of two or more of the foregoing, and (b) at least one amine, wherein the amine has the formula R₃N, in which each R is independently a hydrocarbyl group containing up to about thirty carbon atoms,
and wherein the mole ratio of tetrakis(^{F}aryl)borate of (a) to amine of (b) is in the range of about 1:0.9 to about 1:1.3 to form a solution or
slurry; and
ii) mixing together at least one protic acid with at least a portion of the solution or slurry formed in i),
wherein the mole ratio of tetrakis(^{F}aryl)borate of (a) to protons is in the range of about 1:1 to about 1:1.6
such that a protic ammonium tetrakis(^{F}aryl)borate is formed, wherein each of the ^{F}aryl groups is a fluorine-containing aryl group that has bonded directly to an aromatic ring at least two fluorine atoms, or at least two perfluorohydrocarbyl groups, or at least one fluorine atom and at least one perfluorohydrocarbyl group.

55. A process according to Claim 54 wherein said halomagnesium tetrakis(^{F}aryl)borate is bromomagnesium tetrakis(pentafluorophenyl)borate.

56. A process according to Claim 54 wherein said halomagnesium tetrakis(^{F}aryl)borate is bromomagnesium tetrakis(pentafluorophenyl)borate, wherein the amine is phenyl(dimethyl)amine, and wherein the liquid organic medium comprises one or more liquid dihydrocarbyl ethers.

57. A process according to Claim 56 wherein said liquid dihydrocarbyl ether is diethyl ether.

58. A process according to Claim 54 wherein said protic acid is hydrochloric acid, hydrobromic acid, or hydriodic acid.

59. A process according to Claim 54 wherein said halomagnesium tetrakis(^{F}aryl)borate is bromomagnesium tetrakis(pentafluorophenyl)borate, wherein the amine is phenyl(dimethyl)amine, wherein the liquid organic medium comprises one or more liquid dihydrocarbyl ethers, wherein said liquid dihydrocarbyl ether is diethyl ether, and wherein the protic acid is hydrochloric acid, hydrobromic acid, or hydriodic acid.

60. A process according to Claim 59 wherein the acid is in aqueous solution.

61. A process according to Claim 59 wherein the acid is in diethyl ether.

## Patentansprüche

1. Verfahren zur Herstellung mindestens eines protischen Ammoniumtetrakis(^{F}aryl)borats, bei dem
i)
(a) mindestens ein Alkalimetalltetrakis(^{F}aryl)borat, mindestens ein Magnesiumditetrakis(^{F}aryl)borat, mindestens ein Halogenmagnesiumtetrakis(^{F}aryl)borat oder eine Mischung von zwei oder mehreren der Genannten,
(b) mindestens ein Amin, wobei das Amin die Formel R₃N hat, in der jedes R unabhängig eine Kohlenwasserstoffgruppe ist, die bis zu etwa dreißig Kohlenstoffatome enthält, und wobei das Molverhältnis von Tetrakis(^{F}aryl)borat aus (a) zu Amin aus (b) im Bereich von etwa 1:0,9 bis etwa 1:1,3 liegt,
und (c) ein oder mehrere flüssige Dikohlenwasserstoffether, ein oder mehrere flüssige Kohlenwasserstoffe, ein oder mehrere flüssige halogenierte Kohlenwasserstoffe oder eine Mischung aus zwei oder mehreren der Genannten unter Bildung einer Lösung oder Aufschlämmung in einem flüssigen organischen Medium gemischt werden, und
ii) mindestens eine protische Säure mit mindestens einem Teil der in i) gebildeten Lösung oder Aufschlämmung gemischt wird, wobei das Molverhältnis von Tetrakis(^{F}aryl)borat aus (a) zu Protonen im Bereich von etwa 1:1 bis etwa 1:1,6 liegt,
so dass ein protisches Ammoniumtetrakis(^{F}aryl)borat gebildet wird,
wobei jede der ^{F}Arylgruppen eine fluorhaltige Arylgruppe ist, in der mindestens zwei Fluoratome oder mindestens zwei Perfluorkohlenwasserstoffgruppen oder mindestens ein Fluoratom und mindestens eine Perfluorkohlenwasserstoffgruppe direkt an einen aromatischen Ring gebunden sind.

2. Verfahren nach Anspruch 1, bei dem (a) ein Alkalimetall-tetrakis(^{F}aryl)borat ist und das Alkalimetalltetrakis-(^{F}aryl)borat lösungsmittelfeucht ist.

3. Verfahren nach Anspruch 1, bei dem das Alkalimetalltetra-kis(^{F}aryl)borat ein Natrium- oder Kaliumtetrakis(^{F}aryl)-borat ist.

4. Verfahren nach Anspruch 2, bei dem das Alkalimetalltetra-kis(^{F}aryl)borat ein Natrium- oder Kaliumtetrakis(^{F}aryl)-borat ist.

5. Verfahren nach Anspruch 1, bei dem jede Position an dem aromatischen Ring/den aromatischen Ringen der ^{F}Arylgruppe, die kein Fluoratom oder eine Perfluorkohlenwasserstoffgruppe ist, mit einem Wasserstoffatom, eine Kohlenwasserstoffgruppe, eine Alkoxygruppe oder eine Silylgruppe substituiert ist.

6. Verfahren nach Anspruch 1, bei dem der aromatische Ring der ^{F}Arylgruppe ein Phenylring ist.

7. Verfahren nach Anspruch 1, bei dem alle der Positionen an dem aromatischen Ring bzw. den aromatischen Ringen der Arylgruppe mit Fluoratomen substituiert sind.

8. Verfahren nach Anspruch 6, bei dem das Tetrakis(^{F}aryl)-borat Tetrakis(pentafluorphenyl)borat ist.

9. Verfahren nach Anspruch 1, bei dem das Alkalimetalltetra-kis(^{F}aryl)borat Natriumtetrakis(pentafluorphenyl)borat oder Kaliumtetrakis(pentafluorphenyl)borat ist.

10. Verfahren nach Anspruch 2, bei dem das Alkalimetalltetra-kis(^{F}aryl)borat Natriumtetrakis(pentafluorphenyl)borat oder Kaliumtetrakis(pentafluorphenyl)borat ist.

11. Verfahren nach Anspruch 1, bei dem mindestens eine R-Gruppe des Amins eine Phenylgruppe ist.

12. Verfahren nach Anspruch 1, bei dem mindestens eine R-Gruppe des Amins eine Methylgruppe ist.

13. Verfahren nach Anspruch 1, bei dem das Amin Phenyl(dimethyl)amin ist.

14. Verfahren nach Anspruch 1, bei dem das flüssige organische Medium einen oder mehrere flüssige Dikohlenwasserstoffether umfasst.

15. Verfahren nach Anspruch 14, bei dem der flüssige Dikohlenwasserstoffether Diethylether ist.

16. Verfahren nach Anspruch 1, bei dem das Alkalimetalltetra-kis(^{F}aryl)borat Natriumtetrakis(pentafluorphenyl)borat oder Kaliumtetrakis(pentafluorphenyl)borat ist, das Amin Phenyl(dimethyl)amin ist, das flüssige organische Medium einen oder mehrere flüssige Dikohlenwasserstoffether umfasst und der flüssige Dikohlenwasserstoffether Diethylether ist.

17. Verfahren nach Anspruch 16, bei dem das Alkalimetallte-trakis(^{F}aryl)borat lösungsmittelfeucht ist.

18. Verfahren nach Anspruch 1, bei dem (a) ein Magnesiumdi-[tetrakis(^{F}aryl)borat] ist.

19. Verfahren nach Anspruch 18, bei dem das Magnesiumdi[tetrakis(^{F}aryl)borat] Magnesiumdi[tetrakis(pentafluorphenyl)borat] ist.

20. Verfahren nach Anspruch 18, bei dem das Magnesiumdi[tetrakis(^{F}aryl)borat] Magnesiumdi[tetrakis(pentafluorphenyl)borat] ist, das Amin Phenyl(dimethyl)amin ist, das flüssige organische Medium einen oder mehrere flüssige Dikohlenwasserstoffether umfasst und der flüssige Dikohlenwasserstoffether Diethylether ist.

21. Verfahren nach Anspruch 1, bei dem (a) ein Halogenmagne-siumdi[tetrakis(^{F}aryl)borat] ist.

22. Verfahren nach Anspruch 21, bei dem das Halogenmagnesium-tetrakis(^{F}aryl)borat Brommagnesiumtetrakis(pentafluorphenyl)borat ist.

23. Verfahren nach Anspruch 21, bei dem das Halogenmagnesium-tetrakis(^{F}aryl)borat Brommagnesiumtetrakis(pentafluorphenyl)borat ist, das Amin Phenyl(dimethyl)amin ist, das flüssige organische Medium einen oder mehrere flüssige Dikohlenwasserstoffether umfasst und der flüssige Dikohlenwasserstoffether Diethylether ist.

24. Verfahren nach Anspruch 1, bei dem die protische Säure Chlorwasserstoffsäure, Bromwasserstoffsäure oder Iodwasserstoffsäure ist.

25. Verfahren nach Anspruch 24, bei dem die Säure in Diethylether vorliegt.

26. Verfahren nach Anspruch 1, bei dem die Säure in wässriger Lösung vorliegt.

27. Verfahren nach Anspruch 26, bei dem die Säure Chlorwasserstoffsäure, Bromwasserstoffsäure oder Iodwasserstoffsäure ist.

28. Verfahren nach Anspruch 26, bei dem die Konzentration der Säure in Lösung im Bereich von etwa 0,5 Gew.-% bis etwa 12 Gew.-% liegt.

29. Verfahren nach Anspruch 1, bei dem das Amin Phenyl(dimethyl)amin ist und die protische Säure Chlorwasserstoffsäure, Bromwasserstoffsäure oder Iodwasserstoffsäure ist.

30. Verfahren nach Anspruch 1, bei dem das Alkalimetalltetra-kis(^{F}aryl)borat Natriumtetrakis(pentafluorphenyl)borat oder Kaliumtetrakis(pentafluorphenyl)borat ist, das Amin Phenyl(dimethyl)amin ist, das flüssige organische Medium einen oder mehrere flüssige Dikohlenwasserstoffether umfasst und die protische Säure Chlorwasserstoffsäure, Bromwasserstoffsäure oder Iodwasserstoffsäure ist.

31. Verfahren nach Anspruch 30, bei dem das Natriumtetrakis-(pentafluorphenyl)borat oder Kaliumtetrakis(pentafluorphenyl)borat lösungsmittelfeucht ist und der flüssige Kohlenwasserstoffether Diethylether ist.

32. Verfahren nach Anspruch 30, bei dem die Säure in wässriger Lösung vorliegt.

33. Verfahren nach Anspruch 30, bei dem die Säure in Diethylether vorliegt.

34. Verfahren nach Anspruch 1, bei dem das Magnesiumdi[tetrakis(^{F}aryl)borat] Magnesiumdi[tetrakis(pentafluorphenyl)-borat] ist, das Amin Phenyl(dimethyl)amin ist, das flüssige organische Medium einen oder mehrere flüssige Dikohlenwasserstoffether umfasst, der flüssige Dikohlenwasserstoffether Diethylether ist, und die protische Säure Chlorwasserstoffsäure, Bromwasserstoffsäure oder Iodwasserstoffsäure ist.

35. Verfahren nach Anspruch 34, bei dem die Säure in wässriger Lösung vorliegt.

36. Verfahren nach Anspruch 34, bei dem die Säure in Diethylether vorliegt.

37. Verfahren nach Anspruch 1, bei dem das Halogenmagnesium-tetrakis(^{F}aryl)borat Brommagnesiumtetrakis(pentafluorphenyl)borat ist, das Amin Phenyl(dimethyl)amin ist, das flüssige organische Medium einen oder mehrere flüssige Dikohlenwasserstoffether umfasst, der flüssige Dikohlenwasserstoffether Diethylether ist, und die protische Säure Chlorwasserstoffsäure, Bromwasserstoffsäure oder Iodwasserstoffsäure ist.

38. Verfahren nach Anspruch 37, bei dem die Säure in wässriger Lösung vorliegt.

39. Verfahren nach Anspruch 37, bei dem die Säure in Diethylether vorliegt.

40. Verfahren nach Anspruch 1, das ferner Destillation des flüssigen organischen Mediums in mindestens einem siedenden Kohlenwasserstoff umfasst.

41. Verfahren nach Anspruch 40, bei dem der siedende Kohlenwasserstoff eine Mischung von mindestens einem gesättigten Kohlenwasserstoff und mindestens einem aromatischen Kohlenwasserstoff ist.

42. Verfahren nach Anspruch 41, bei dem der aromatische Kohlenwasserstoff Toluol ist.

43. Verfahren nach Anspruch 41, bei dem der gesättigte Kohlenwasserstoff Isopar-E ist.

44. Verfahren nach Anspruch 40, bei dem das flüssige organische Medium einen oder mehrere flüssige Dikohlenwasserstoffether umfasst.

45. Verfahren nach Anspruch 41, bei dem das protische Ammo-niumtetrakis(^{F}aryl)borat nicht in Kohlenwasserstoff löslich ist, und bei dem das protische Ammoniumtetrakis-(^{F}aryl)borat ausgefällt wird.

46. Verfahren nach Anspruch 41, bei dem das protische Ammo-niumtetrakis(^{F}aryl)borat in Kohlenwasserstoff löslich ist, und bei dem das protische Ammoniumtetra-kis(^{F}aryl)borat in Lösung gewonnen wird.

47. Verfahren nach Anspruch 1, bei dem mindestens ein Teil der Lösung des protischen Ammoniumtetrakis(^{F}aryl)borats in dem flüssigen organischen Medium von der wässrigen Phase abgetrennt wird.

48. Verfahren nach Anspruch 47, bei dem mindestens ein Teil des protischen Ammoniumtetrakis(^{F}aryl)borats aus der Lösung des protischen Ammoniumtetrakis(^{F}aryl)borats in dem flüssigen organischen Medium isoliert wird.

49. Verfahren nach Anspruch 40, bei dem der siedende Kohlenwasserstoff eine Mischung aus mindestens einem gesättigten Kohlenwasserstoff und mindestens einem aromatischen Kohlenwasserstoff ist, wobei der aromatische Kohlenwasserstoff Toluol ist, und das flüssige organische Medium einen oder mehrere flüssige Dikohlenwasserstoffether umfasst.

50. Verfahren nach Anspruch 49, bei dem der gesättigte Kohlenwasserstoff Isopar-E ist.

51. Verfahren nach Anspruch 1, bei dem ferner ein flüssiges Clathrat mit dem protischen Ammoniumtetrakis(^{F}aryl)borat gebildet wird.

52. Verfahren nach Anspruch 51, bei dem zur Bildung des flüssigen Clathrats Toluol verwendet wird.

53. Verfahren nach Anspruch 51, bei dem das protische Ammoni-umtetrakis(^{F}aryl)borat Phenyl(diethyl)ammoniumtetrakis-(pentafluorphenyl)borat ist.

54. Verfahren zur Herstellung mindestens eines protischen Ammoniumtetrakis(^{F}aryl)borats, bei dem
i)
(a) eine Mischung, die flüssiges organisches Medium und mindestens ein Halogenmagnesiumtetrakis(^{F}aryl)-borat umfasst, wobei das flüssige organische Medium aus einem oder mehreren flüssigen Dikohlenwasserstoffethern, einem oder mehreren flüssigen Kohlenwasserstoffen, einem oder mehreren flüssigen halogenierten Kohlenwasserstoffen oder einer Mischung aus zwei oder mehr der Genannten zusammengesetzt ist, und
(b) mindestens ein Amin, wobei das Amin die Formel R₃N hat, in der jedes R unabhängig eine Kohlenwasserstoffgruppe ist, die bis zu etwa dreißig Kohlenstoffatome enthält, und wobei das Molverhältnis von Tetrakis(^{F}aryl)borat aus (a) zu Amin aus (b) im Bereich von etwa 1:0,9 bis etwa 1:1,3 liegt, unter Bildung einer Lösung oder Aufschlämmung gemischt werden, und
ii) mindestens eine protische Säure mit mindestens einem Teil der in i) gebildeten Lösung oder Aufschlämmung gemischt wird,
wobei das Molverhältnis von Tetrakis(^{F}aryl)borat aus (a) zu Protonen im Bereich von etwa 1:1 bis etwa 1:1,6 liegt,
so dass ein protisches Ammoniumtetrakis(^{F}aryl)borat gebildet wird,
wobei jede der ^{F}Arylgruppen eine fluorhaltige Arylgruppe ist, in der mindestens zwei Fluoratome oder mindestens zwei Perfluorkohlenwasserstoffgruppen oder mindestens ein Fluoratom und mindestens eine Perfluorkohlenwasserstoffgruppe direkt an einen aromatischen Ring gebunden sind.

55. Verfahren nach Anspruch 54, bei dem das Halogenmagnesium-tetrakis(^{F}aryl)borat Brommagnesiumtetrakis(pentafluorphenyl)borat ist.

56. Verfahren nach Anspruch 54, bei dem das Halogenmagnesium-tetrakis(^{F}aryl)borat Brommagnesiumtetrakis(pentafluorphenyl)borat ist, das Amin Phenyl(dimethyl)amin ist und das flüssige organische Medium ein oder mehrere flüssige Dikohlenwasserstoffether umfasst.

57. Verfahren nach Anspruch 56, bei dem der flüssige Dikohlenwasserstoffether Diethylether ist.

58. Verfahren nach Anspruch 54, bei dem die protische Säure Chlorwasserstoffsäure, Bromwasserstoffsäure oder Iodwasserstoffsäure ist.

59. Verfahren nach Anspruch 54, bei dem das Halogenmagnesium-tetrakis(^{F}aryl)borat Brommagnesiumtetrakis(pentafluorphenyl)borat ist, das Amin Phenyl(dimethyl)amin ist, das flüssige organische Medium einen oder mehrere flüssige Dikohlenwasserstoffether umfasst, der flüssige Dikohlenwasserstoffether Diethylether ist, und die protische Säure Chlorwasserstoffsäure, Bromwasserstoffsäure oder Iodwasserstoffsäure ist.

60. Verfahren nach Anspruch 59, bei dem die Säure in wässriger Lösung vorliegt.

61. Verfahren nach Anspruch 59, bei dem die Säure in Diethylether vorliegt.

## Revendications

1. Procédé de préparation d'au moins un tétrakis (fluoroaryl) borate d'ammonium protique, lequel procédé comprend
i) le mélange de (a) au moins un tétrakis (fluoroaryl) borate de métal alcalin, au moins un ditétrakis (fluoroaryl) borate de magnésium, au moins un tétrakis (fluoroaryl) borate d'halomagnésium, ou un mélange de deux ou plusieurs des précédents, de (b) au moins une amine, dans lequel l'amine répond à la formule R₃N, formule dans laquelle chaque R est indépendamment un groupe hydrocarboné contenant jusqu'à environ trente atomes de carbone, et dans lequel le rapport molaire de tétrakis (fluoroaryl) borate de (a) à l'amine de (b) est compris dans la plage d'environ 1:0,9 à environ 1:1,3, et de (c) un ou plusieurs éthers dihydrocarbonés liquides, un ou plusieurs hydrocarbures liquides, un ou plusieurs hydrocarbures halogénés liquides, ou un mélange de deux ou plusieurs des précédents, pour former une solution ou une suspension épaisse dans un milieu organique liquide ; et
ii) le mélange d'au moins un acide protique et d'au moins une partie de la solution ou de la suspension épaisse formée dans i), dans lequel le rapport molaire de tétrakis (fluoroaryl) borate de (a) aux protons est compris dans la plage d'environ 1:1 à environ 1:1,6, de manière à former un tétrakis (fluoroaryl) borate d'ammonium protique,
dans lequel chacun des groupes fluoroaryle est un groupe aryle contenant du fluor qui possède, liés directement à un noyau aromatique, au moins deux atomes de fluor, ou au moins deux groupes perfluorohydrocarbonés, ou au moins un atome de fluor et au moins un groupe perfluorohydrocarboné.

2. Procédé selon la revendication 1, dans lequel (a) est un tétrakis (fluoroaryl) borate de métal alcalin, et dans lequel ledit tétrakis (fluoroaryl) borate de métal alcalin est contenu dans un solvant.

3. Procédé selon la revendication 1, dans lequel ledit tétrakis (fluoroaryl) borate de métal alcalin est un tétrakis (fluoroaryl) borate de sodium ou de potassium.

4. Procédé selon la revendication 2, dans lequel ledit tétrakis (fluoroaryl) borate de métal alcalin est un tétrakis (fluoroaryl) borate de sodium ou de potassium.

5. Procédé selon la revendication 1, dans lequel chaque position sur le(s) noyau(x) aromatique(s) du groupe fluoroaryle qui n'est pas substituée par un atome de fluor ou par un groupe perfluorohydrocarboné est substituée par un atome d'hydrogène, un groupe hydrocarboné, un groupe alcoxy, ou un groupe silyle.

6. Procédé selon la revendication 1, dans lequel le noyau aromatique dudit groupe fluoroaryle est un noyau phényle.

7. Procédé selon la revendication 1, dans lequel toutes les positions sur le(s) dit(s) noyau(x) aromatique(s) dudit groupe aryle sont substituées par des atomes de fluor.

8. Procédé selon la revendication 6, dans lequel le tétrakis (fluoroaryl) borate est un tétrakis (pentafluorophényl) borate.

9. Procédé selon la revendication 1, dans lequel le tétrakis (fluoroaryl) borate de métal alcalin est le tétrakis (pentafluorophényl) borate de sodium ou le tétrakis (pentafluorophényl) borate de potassium.

10. Procédé selon la revendication 2, dans lequel le tétrakis (fluoroaryl) borate de métal alcalin est le tétrakis (pentafluorophényl) borate de sodium ou le tétrakis (pentafluorophényl) borate de potassium.

11. Procédé selon la revendication 1, dans lequel au moins un groupe R de ladite amine est un groupe phényle.

12. Procédé selon la revendication 1, dans lequel au moins un groupe R de ladite amine est un groupe méthyle.

13. Procédé selon la revendication 1, dans lequel l'amine est la phényl (diméthyl) amine.

14. Procédé selon la revendication 1, dans lequel le milieu organique liquide comprend un ou plusieurs éthers dihydrocarbonés liquides.

15. Procédé selon la revendication 14, dans lequel l'éther dihydrocarboné liquide est le diéthyl éther.

16. Procédé selon la revendication 1, dans lequel le tétrakis (fluoroaryl) borate de métal alcalin est le tétrakis (pentafluorophényl) borate de sodium ou le tétrakis (pentafluorophényl) borate de potassium, dans lequel l'amine est la phényl (diméthyl) amine, dans lequel le milieu organique liquide comprend un ou plusieurs éthers dihydrocarbonés liquides, et dans lequel ledit éther dihydrocarboné liquide est le diéthyl éther.

17. Procédé selon la revendication 16, dans lequel ledit tétrakis (fluoroaryl) borate de métal alcalin est contenu dans un solvant.

18. Procédé selon la revendication 1, dans lequel (a) est un di [tétrakis (fluoroaryl) borate] de magnésium.

19. Procédé selon la revendication 18, dans lequel ledit di [tétrakis (fluoroaryl) borate] de magnésium est le di [tétrakis (pentafluorophényl) borate] de magnésium.

20. Procédé selon la revendication 18, dans lequel ledit di [tétrakis (fluoroaryl) borate] de magnésium est le di [tétrakis (pentafluorophényl) borate] de magnésium, dans lequel l'amine est la phényl (diméthyl) amine, dans lequel le milieu organique liquide comprend un ou plusieurs éthers dihydrocarbonés liquides, et dans lequel ledit éther dihydrocarboné liquide est le diéthyl éther.

21. Procédé selon la revendication 1, dans lequel (a) est un tétrakis (fluoroaryl) borate d'halomagnésium.

22. Procédé selon la revendication 21, dans lequel ledit tétrakis (fluoroaryl) borate d'halomagnésium est le tétrakis (pentafluorophényl) borate de bromomagnésium.

23. Procédé selon la revendication 21, dans lequel ledit tétrakis (fluoroaryl) borate d'halomagnésium est le tétrakis (pentafluorophényl) borate de bromomagnésium, dans lequel l'amine est la phényl (diméthyl) amine, dans lequel le milieu organique liquide comprend un ou plusieurs éthers dihydrocarbonés liquides, et dans lequel ledit éther dihydrocarboné liquide est le diéthyl éther.

24. Procédé selon la revendication 1, dans lequel ledit acide protique est l'acide chlorhydrique, l'acide bromhydrique, ou l'acide iodhydrique.

25. Procédé selon la revendication 24, dans lequel ledit acide est contenu dans le diéthyl éther.

26. Procédé selon la revendication 1, dans lequel ledit acide est en solution aqueuse.

27. Procédé selon la revendication 26, dans lequel l'acide est l'acide chlorhydrique, l'acide bromhydrique, ou l'acide iodhydrique.

28. Procédé selon la revendication 26, dans lequel la concentration en acide dans la solution est comprise dans la plage d'environ 0,5% en poids à environ 12% en poids.

29. Procédé selon la revendication 1, dans lequel l'amine est la phényl (diméthyl) amine, dans lequel l'acide protique est l'acide chlorhydrique, l'acide bromhydrique, ou l'acide iodhydrique.

30. Procédé selon la revendication 1, dans lequel le tétrakis (fluoroaryl) borate de métal alcalin est le tétrakis (pentafluorophényl) borate de sodium ou le tétrakis (pentafluorophényl) borate de potassium, dans lequel l'amine est la phényl (diméthyl) amine, dans lequel le milieu organique liquide comprend un ou plusieurs éthers dihydrocarbonés liquides, et dans lequel l'acide protique est l'acide chlorhydrique, l'acide bromhydrique, ou l'acide iodhydrique.

31. Procédé selon la revendication 30, dans lequel ledit tétrakis (pentafluorophényl) borate de sodium ou ledit tétrakis (pentafluorophényl) borate de potassium est contenu dans un solvant, et dans lequel ledit éther dihydrocarboné liquide est le diéthyl éther.

32. Procédé selon la revendication 30, dans lequel l'acide est en solution aqueuse.

33. Procédé selon la revendication 30, dans lequel l'acide est contenu dans le diéthyl éther.

34. Procédé selon la revendication 1, dans lequel ledit di [tétrakis (fluoroaryl) borate] de magnésium est le di [tétrakis (pentafluorophényl) borate] de magnésium, dans lequel l'amine est la phényl (diméthyl) amine, dans lequel le milieu organique liquide comprend un ou plusieurs éthers dihydrocarbonés liquides, dans lequel ledit éther dihydrocarboné liquide est le diéthyl éther, et dans lequel l'acide protique est l'acide chlorhydrique, l'acide bromhydrique, ou l'acide iodhydrique.

35. Procédé selon la revendication 34, dans lequel l'acide est en solution aqueuse.

36. Procédé selon la revendication 34, dans lequel l'acide est contenu dans le diéthyl éther.

37. Procédé selon la revendication 1, dans lequel ledit tétrakis (fluoroaryl) borate d'halomagnésium est le tétrakis (pentafluorophényl) borate de bromomagnésium, dans lequel l'amine est la phényl (diméthyl) amine, dans lequel le milieu organique liquide comprend un ou plusieurs éthers dihydrocarbonés liquides, dans lequel ledit éther dihydrocarboné liquide est le diéthyl éther, et dans lequel l'acide protique est l'acide chlorhydrique, l'acide bromhydrique, ou l'acide iodhydrique.

38. Procédé selon la revendication 37, dans lequel l'acide est en solution aqueuse.

39. Procédé selon la revendication 37, dans lequel l'acide est contenu dans le diéthyl éther.

40. Procédé selon la revendication 1, comprenant en outre une distillation du milieu organique liquide dans au moins un hydrocarbure en ébullition.

41. Procédé selon la revendication 40, dans lequel ledit hydrocarbure en ébullition est un mélange d'au moins un hydrocarbure saturé et d'au moins un hydrocarbure aromatique.

42. Procédé selon la revendication 41, dans lequel ledit hydrocarbure aromatique est le toluène.

43. Procédé selon la revendication 41, dans lequel ledit hydrocarbure saturé est le Isopar-E.

44. Procédé selon la revendication 40, dans lequel le milieu organique liquide comprend un ou plusieurs éthers dihydrocarbonés liquides.

45. Procédé selon la revendication 41, dans lequel ledit tétrakis (fluoroaryl) borate d'ammonium protique n'est pas soluble dans les hydrocarbures, et dans lequel ledit tétrakis (fluoroaryl) borate d'ammonium protique est précipité.

46. Procédé selon la revendication 41, dans lequel ledit tétrakis (fluoroaryl) borate d'ammonium protique est soluble dans les hydrocarbures, et dans lequel ledit tétrakis (fluoroaryl) borate d'ammonium protique est récupéré en solution.

47. Procédé selon la revendication 1, dans lequel au moins une partie de la solution du tétrakis (aryl) borate d'ammonium protique dans le milieu organique liquide est séparée à partir de la phase aqueuse.

48. Procédé selon la revendication 47, dans lequel au moins une partie du tétrakis (aryl) borate d'ammonium protique est isolée à partir de ladite solution du tétrakis (aryl) borate d'ammonium protique dans le milieu organique liquide.

49. Procédé selon la revendication 40, dans lequel ledit hydrocarbure en ébullition est un mélange d'au moins un hydrocarbure saturé et d'au moins un hydrocarbure aromatique, dans lequel ledit hydrocarbure aromatique est le toluène, et
dans lequel le milieu organique liquide comprend un ou plusieurs éthers dihydrocarbonés liquides.

50. Procédé selon la revendication 49, dans lequel ledit hydrocarbure saturé est le Isopar-E.

51. Procédé selon la revendication 1, comprenant en outre la formation d'un clathrate liquide avec le tétrakis (fluoroaryl) borate d'ammonium protique.

52. Procédé selon la revendication 51, dans lequel le toluène est utilisé pour la formation du clathrate liquide.

53. Procédé selon la revendication 51, dans lequel ledit tétrakis (fluoroaryl) borate d'ammonium protique est le tétrakis (pentafluorophényl) borate de phényl (diéthyl) ammonium.

54. Procédé de préparation d'au moins un tétrakis (fluoroaryl) borate d'ammonium protique, lequel procédé comprend
i) le mélange de (a) un mélange comprenant un milieu organique liquide et au moins un tétrakis (fluoroaryl) borate d'halomagnésium, dans lequel le milieu organique liquide est composé d'un ou plusieurs éthers dihydrocarbonés liquides, d'un ou plusieurs hydrocarbures liquides, d'un ou plusieurs hydrocarbures halogénés liquides, ou d'un mélange de deux ou plusieurs des précédents, et de (b) au moins une amine, dans lequel l'amine répond à la formule R₃N, formule dans laquelle chaque R est indépendamment un groupe hydrocarboné contenant jusqu'à environ trente atomes de carbone, et
dans lequel le rapport molaire de tétrakis (fluoroaryl) borate de (a) à l'amine de (b) est compris dans la plage d'environ 1:0,9 à environ 1:1,3 pour former une solution ou une suspension épaisse ; et
ii) le mélange d'au moins un acide protique et d'au moins une partie de la solution ou de la suspension épaisse formée dans i), dans lequel le rapport molaire de tétrakis (fluoroaryl) borate de (a) aux protons est compris dans la plage d'environ 1:1 à environ 1:1,6, de manière à former un tétrakis (fluoroaryl) borate d'ammonium protique,
dans lequel chacun des groupes fluoroaryle est un groupe aryle contenant du fluor qui possède, liés directement à un noyau aromatique, au moins deux atomes de fluor, ou au moins deux groupes perfluorohydrocarbonés, ou au moins un atome de fluor et au moins un groupe perfluorohydrocarboné.

55. Procédé selon la revendication 54, dans lequel ledit tétrakis (fluoroaryl) borate d'halomagnésium est le tétrakis (pentafluorophényl) borate de bromomagnésium.

56. Procédé selon la revendication 54, dans lequel ledit tétrakis (fluoroaryl) borate d'halomagnésium est le tétrakis (pentafluorophényl) borate de bromomagnésium, dans lequel l'amine est la phényl (diméthyl) amine, et dans lequel le milieu organique liquide comprend un ou plusieurs éthers dihydrocarbonés liquides.

57. Procédé selon la revendication 56, dans lequel ledit éther dihydrocarboné liquide est le diéthyl éther.

58. Procédé selon la revendication 54, dans lequel ledit acide protique est l'acide chlorhydrique, l'acide bromhydrique, ou l'acide iodhydrique.

59. Procédé selon la revendication 54, dans lequel ledit tétrakis (fluoroaryl) borate d'halomagnésium est le tétrakis (pentafluorophényl) borate de bromomagnésium, dans lequel l'amine est la phényl (diméthyl) amine, dans lequel le milieu organique liquide comprend un ou plusieurs éthers dihydrocarbonés liquides, dans lequel ledit éther dihydrocarboné liquide est le diéthyl éther, et dans lequel l'acide protique est l'acide chlorhydrique, l'acide bromhydrique, ou l'acide iodhydrique.

60. Procédé selon la revendication 59, dans lequel l'acide est en solution aqueuse.

61. Procédé selon la revendication 59, dans lequel l'acide est contenu dans le diéthyl éther.
